# EUROPEAN PATENT APPLICATION

(11) **EP 4 621 859 A1**
(43) Date of publication of application: **24.09.2025**
(21) Application number: 24852209.6
(22) Date of filing: 02.08.2024
(51) Int. Cl.: H01M 4/04, G06Q 50/04, G09F 9/30

(54) **METHOD FOR MANUFACTURING SECONDARY BATTERY**

(30) Priority: 07.08.2023 KR 20230102883; 14.06.2024 KR 20240077824
(71) Applicant: LG Energy Solution, Ltd., Seoul 07335 (KR)
(72) Inventor: KIM, June Hee, Daejeon 34122 (KR); HUH, Seung, Daejeon 34122 (KR); SHIN, Jong Kwon, Daejeon 34122 (KR); SIM, Min Kyu, Daejeon 34122 (KR); KIM, Min Su, Daejeon 34122 (KR); PARK, Jong Seok, Daejeon 34122 (KR)
(74) Representative: BCKIP Part mbB
(86) International application number: PCT/KR2024/011363
(87) International publication number: WO 2025/033855

(57) **Abstract**

Provided is a method of manufacturing a secondary battery according to example embodiments. The method includes: coating an electrode sheet, which is unwound from an electrode roll, with an electrode slurry to form a plurality of coated lanes, in which there are a plurality of uncoated parts between the plurality of coated lanes; and forming a plurality of datum points on the electrode sheet, in which each of the plurality of datum points includes a first symbol indicating an orientation of the datum points and a second symbol indicating a corresponding coated lane among the plurality of coated lanes.

## Description

### [Technical Field]

The present invention relates to a method of manufacturing a secondary battery. The present application claims the benefit of priority based on Korean Patent Application No. 10-2023-0102883, filed on August 7, 2023 and Korean Patent Application No. 10-2024-0077824, filed on June 14, 2024, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by press rolls. In the roll press process, a density, performance and surface quality of the electrode may be determined. In the slitting process, the electrode may be cut into a plurality of electrodes according to the design of the battery cell.

### [Disclosure]

### [Technical Problem]

The present invention is directed to providing a method of manufacturing a secondary battery with improved traceability.

### [Technical Solution]

Embodiments of the present invention provide a method of manufacturing a secondary battery. The method includes: coating an electrode sheet, which is unwound from an electrode roll, with an electrode slurry to form a plurality of coated lanes, in which there are a plurality of uncoated parts between the plurality of coated lanes; and forming a plurality of datum points on the electrode sheet, in which each of the plurality of datum points includes a first symbol indicating an orientation of each of the plurality of datum points and a second symbol indicating a corresponding coated lane among the plurality of coated lanes.

Each of the plurality of datum points may include a third symbol representing a formed sequence number of the plurality of datum points.

The third symbol may represent a tens digit of the formed sequence number.

Each of the plurality of datum points may further include a fourth symbol representing the formed sequence number of the plurality of datum points.

The fourth symbol may represent a units digit of the formed sequence number.

The first symbol may include an alphabet, and each of the second to fourth symbols may include a number.

The second symbol may follow the first symbol, the third symbol may follow the second symbol, and the fourth symbol may follow the third symbol.

The first symbol may follow the second symbol, the fourth symbol may follow the first symbol, and the third symbol may follow the fourth symbol.

The first symbol may further represent the corresponding coated lane among the plurality of coated lanes.

The first symbol may represent a tens digit representing the corresponding coated lane among the plurality of coated lanes.

The second symbol may represent a units digit representing a corresponding coated lane among the plurality of coated lanes.

The plurality of datum points may be formed by dot printing.

The plurality of datum points may be formed by inkjet printing.

The plurality of datum points may be formed by laser printing.

The plurality of datum points may be formed on the plurality of uncoated parts.

Example embodiments provide an electrode. The electrode includes a current collector including an electrode tab, and a positive electrode active material on the current collector, in which there is a datum point on the electrode tab.

The datum point may include a first symbol, a second symbol, a third symbol, and a fourth symbol.

The first symbol may represent an orientation of the datum point.

The second symbol may represent a coated lane from which the electrode is derived.

Each of the third symbol and the fourth symbol may represent a formed sequence number of the datum point.

The third symbol may represent a tens digit of the formed sequence number.

The fourth symbol may represent a units digit of the formed sequence number.

The first symbol may be an alphabet, and each of the second to fourth symbols may be a number.

The datum point may include first to third symbols.

The datum point may include first to third symbols.

The datum point may include first and second symbols.

The electrode may further include a data matrix on the electrode tab.

### [Advantageous Effects]

According to example embodiments of the present invention, a datum point with a symbol representing an orientation thereof is formed on a plurality of uncoated parts of an electrode sheet. Accordingly, the orientation of the datum point can be recognized to increase the accuracy of recognition of the datum point.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 illustrates a coating device according to example embodiments.
FIG. 3A illustrates a first electrode sheet processed by a coating device.
FIG. 3B illustrates a first datum point;
FIG. 3C illustrates a first datum point;
FIG. 3D illustrates a first datum point;
FIG. 3E illustrates a first datum point;
FIG. 3F illustrates a first datum point;
FIG. 4 illustrates a roll pressing device according to example embodiments.
FIGS. 5 and 6 are plan views of a second electrode sheet.
FIG. 7 illustrates a slitting device according to example embodiments.
FIGS. 8 and 9 are plan views of a third electrode sheet.
FIG. 10 is a flowchart of a method of manufacturing a secondary battery according to example embodiments.
FIG. 11 is a plan view of a positive electrode according to example embodiments.
FIG. 12 is a cross-sectional view taken along line 11I-11I' of FIG. 11.
FIGS. 13 to 18 are plan views of positive electrodes according to other example embodiments.
FIG. 19 is a plan view of an example of a negative electrode.
FIG. 20 is a cross-sectional view taken along line 19I-19I' of FIG. 19.
FIG. 21 is a plan view of an electrode assembly according to example embodiments.
FIG. 22 is a cross-sectional view taken along line 21I-21I' of FIG. 21.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

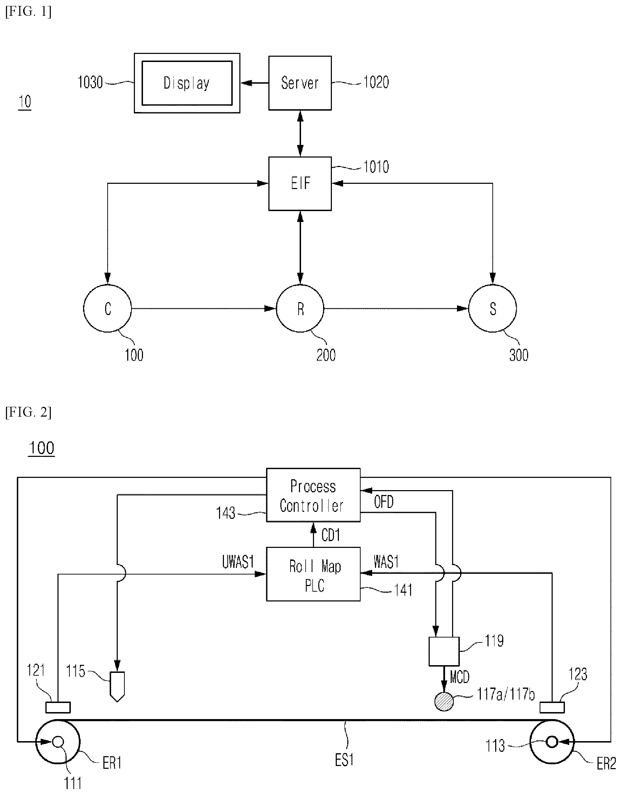

FIG. 1 illustrates a secondary battery manufacturing system 10 according to example embodiments.

Referring to FIG. 1, the secondary battery manufacturing system 10 may include a coating device 100, a roll pressing device 200, a slitting device 300, an equipment interface (EIF) 1010, a server 1020, and a display device 1030.

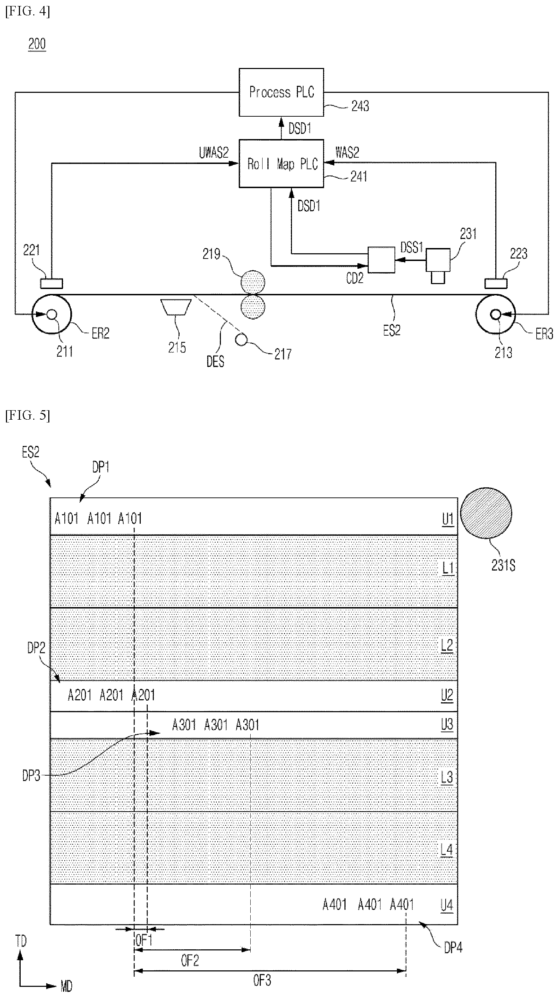

The secondary battery manufacturing system 10 may be configured to manufacture a battery cell (e.g., a cylindrical battery cell) by performing a series of roll-to-roll processes. An electrode sheet unwound from an input electrode roll may be processed by one of a die coater 123 (see FIG. 2) of the coating device 100, press rolls 219 (see FIG. 4) of the roll pressing device 200, and a slitting knife 315 (see FIG. 5) of the slitting device 300, and the processed electrode sheet may be wound into an electrode roll. Accordingly, each of operations performed by the coating device 100, the roll pressing device 200, and the slitting device 300 to produce electrodes of a secondary battery may be referred to as a roll-to-roll process.

The coating device 100 may perform the coating process on the electrode sheet. In the coating process, the electrode sheet may be coated with an electrode slurry. The electrode slurry may include an active material, a conductive agent, a binder, and a solvent. The electrode slurry may be prepared by dissolving the active material, the conductive agent, the binder, etc. in the solvent.

The roll pressing device 200 may perform the roll press process on the electrode sheet. In the roll press process, the electrode sheet coated with the electrode slurry may be passed through between the press rolls 219 (see FIG. 4). Through the roll press process, a surface of the electrode sheet may be planarized, and a binding force between the active material on the electrode sheet and a current collector may be improved.

The slitting device 300 may perform the slitting process on the electrode sheet. The electrode sheet may be divided into a plurality of electrode sheets by the slitting process.

Electrode rolls completed by the slitting device 300 may be processed by a winding device or a notching device. Accordingly, a stack type electrode assembly or a cylindrical electrode assembly may be provided.

When the electrode sheet includes a defective portion, the defective portion of the electrode sheet may be scrapped. The defective portion of the electrode sheet may be scrapped by the roll pressing device 200 or a rewinding stage (not shown).

The EIF 1010 may be a device for communication between the server 1020 and process programmable logic controllers (PLCs) of manufacturing equipment. A process PLC 143 (see FIG. 2) of the coating device 100, a process PLC 243 (see FIG. 4) of the roll pressing device 200, and a process PLC 343 (see FIG. 5) of the slitting device 300 may communicate with the server 1020 through the EIF 1010. Accordingly, data of process events generated by the coating device 100, the roll pressing device 200, and the slitting device 300 may be transmitted to the server 1020.

The server 1020 may be configured to generate first to third roll maps including data of process events. Data of process events included in a roll map may include values indicating the process events and coordinates matching the values. The coordinates may represent positions on an electrode. Accordingly, the roll map enables feedback, feedforward, and tracking of a secondary battery manufacturing process.

Roll maps may be generated in units of lots. A lot is a production unit of a roll-to-roll process, and an example thereof is an electrode roll (or an electrode assembly roll) separated after a target winding length in each process is achieved. Similarly, an electrode roll loaded on an unwinder of each process is an example of a lot. The server 1220 may generate and store a roll map of each of processes (e.g., the coating process, the roll press process, or the slitting process).

In a roll map, time series data constructed over time (i.e., according to the progress of a process) may be related to coordinate data collected based on the amount of movement (i.e., the amount of exhaustion or the amount of input) of an electrode sheet.

The manufacture of a secondary battery involves a series of different processes, and a leading process affects the following process. In this case, it is difficult to reflect time series data of the leading process in the following process when the time series data of the leading process does not directly match a real-world workpiece, an intermediate product, and a product. Hereinafter, correcting the following process based on data generated according to a result of the leading process will be referred to as feedforward.

Here, the workpiece is an article provided as a result of each process, e.g., an electrode sheet on which the coating process, the roll press process, and the slitting process are performed. The intermediate product may include separators that are cut by a notching process, electrodes, and an assembly thereof (i.e., an electrode assembly). The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

Generally, process events occur as a result of performing a process and thus data thereof is time series data. Accordingly, the data of the process events may include values indicating the events and time values matching the values.

For feedforward, time series data should be related to positions on real-world workpieces, components, intermediate products, and products. Here, the feedforward may include controlling processing of an electrode sheet, based on a roll map generated in a preceding process. The roll map may allow time series data to be connected with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforward based on generation of the roll map and the roll map may improve the productivity and quality of the secondary battery manufacturing process by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in a battery cell on the market, history data of the manufacture of the battery cell may be retrieved based on the cell ID.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a slitting process.

According to other example embodiments, the server 1020 may be configured to store and process raw measurement data. The server 1020 may manage the quality of processing the electrode sheet by continuously monitoring the processing of the electrode sheet based on the measurement data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse, and store a roll map for a long period of time according to a product quality guarantee period and the like.

According to other example embodiments, the server 1020 may perform all functions of an MES, an SPC, and a data warehouse or be provided separately from the MES, the SPC, and the data warehouse to create a role map.

FIG. 2 illustrates a coating device 100 according to example embodiments.

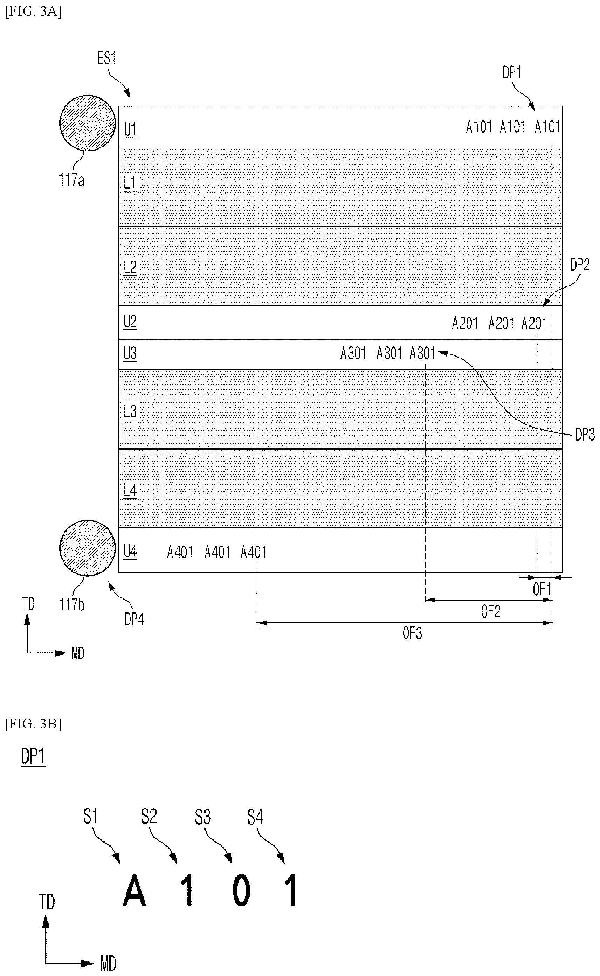

FIG. 3A illustrates a first electrode sheet ES1 processed by the coating device 100.

FIG. 3B illustrates a first datum point DP1.

Referring to FIGS. 2 to 3B, the coating device 100 may include an unwinder 111, a rewinder 113, a die coater 115, markers 117a and 117b, a controller 119, a first rotary encoder 121, a second rotary encoder 123, an inspector 131, a roll map PLC 141, and a process PLC 143.

A first electrode roll ER1 may be loaded on the unwinder 111. The unwinder 111 may be configured to unwind the first electrode sheet ES1 from the first electrode roll ER1. The rewinder 113 may be configured to wind the first electrode sheet ES1 into a second electrode roll ER2. Accordingly, the first electrode sheet ES1 may be moved between the unwinder 111 and the rewinder 113.

The first electrode sheet ES1 may be wound into the second electrode roll ER2, and be cut in a transverse direction TD and separated after a certain winding length is achieved. The separated second electrode roll ER2 is an article on which the coating process is completed and may be managed as a lot that is a unit of a production process.

The first rotary encoder 121 may be configured to detect the amount of the first electrode sheet ES1 unwound from the first electrode roll ER1 by the unwinder 111. Accordingly, the first rotary encoder 121 may be configured to generate an input amount signal UWAS1 indicating a length of the first electrode sheet ES1 unwound by the unwinder 111. The first rotary encoder 121 may be configured to transmit the input amount signal UWAS1 to the roll map PLC 141.

The second rotary encoder 123 may be configured to detect the amount of the first electrode sheet ES1 wound into the second electrode roll ER2 by the rewinder 113. Accordingly, the second rotary encoder 123 may be configured to generate an exhaustion amount signal WAS1 indicating a length of the first electrode sheet ES1 wound by the rewinder 113. The second rotary encoder 123 may be configured to transmit the exhaustion amount signal WAS1 to the roll map PLC 141.

The die coater 115 may be configured to coat the first electrode sheet ES1 with an electrode slurry containing an active material. When the first electrode sheet ES1 is a positive electrode current collector, an electrode slurry containing a positive electrode active material may be provided on the first electrode sheet ES1, and when the first electrode sheet ES1 is a negative electrode current collector, an electrode slurry containing a negative electrode active material may be provided on the first electrode sheet ES1.

The die coater 115 may form first to fourth coated lanes L1, L2, L3, and L4 (hereinafter, L1 to L4) on the first electrode sheet ES1. The first to fourth coated lanes L1 to L4 are parts of the first electrode sheet ES1 coated with an active material.

The first and second coated lanes L1 and L2 may be formed from the same slit of the die coater 115 and be connected to each other. The third and fourth coated lanes L3 and L4 may be formed from the same slit of the die coater 115 and be connected to each other.

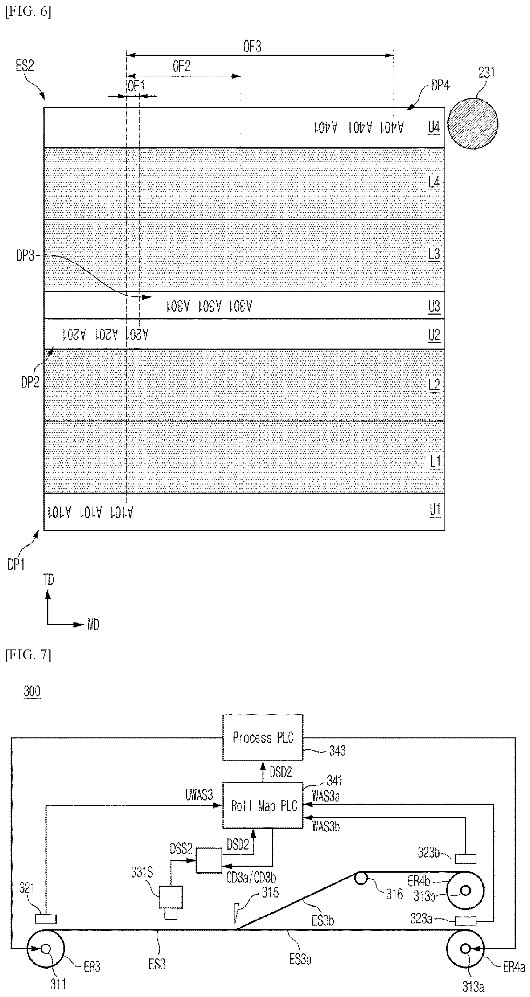

The first and second coated lanes L1 and L2 and the third and fourth coated lanes L3 and L4 may be separated by the slitting device 300 (see FIG. 7). That is, the first electrode sheet ES1 including the four coated lanes L1 to L4 may be cut into a plurality of individualized electrode sheets ES3a and ES3b (see FIG. 7) including only one of the first to fourth coated lanes L1-L4 by the slitting device 300 (see FIG. 7).

Each of the coated lanes L1 to L4 may extend in a machine direction MD of the first electrode sheet ES1. The coated lanes L1 to L4 may be spaced apart from each other in the transverse direction TD of the first electrode sheet ES1.

Each of first to fourth **uncoated parts** U1, U2, U3, U4 (hereinafter, U1 to U4) is a part of the first electrode sheet ES1 that is not coated with the active material. The first and fourth uncoated parts U1 and U4 may be at both ends of the first electrode sheet ES1 in the transverse direction TD. The first and fourth uncoated parts U1 and U4 may be spaced apart from each other with the first to fourth coated lanes L1 to L4 interposed therebetween. The second and third uncoated parts U2 and U3 may be interposed between the second and third coated lanes L2 and L3.

The first uncoated part U1 corresponds to the first coated lane L1, and the first uncoated part U1 and the first coated lane L1 may be included in the same electrode roll after the slitting process. The second uncoated part U2 corresponds to the second coated lane L2, and the second uncoated part U2 and the second coated lane L2 may be included in the same electrode roll after the slitting process. The third uncoated part U3 corresponds to the third coated lane L3, and the third uncoated part U3 and the third coated lane L3 may be included in the same electrode roll after the slitting process. The fourth uncoated part U4 corresponds to the fourth coated lane L4, and the fourth uncoated part U4 and the fourth coated lane L4 may be included in the same electrode roll after the slitting process.

Hereinafter, the technical idea of the present invention will be described with reference to the first electrode sheet ES1 including the four coated lanes L1 to L4 and the four uncoated parts U1 to U4. Those of ordinary skill in the art will be able to easily derive a method of generating a roll map for each process of an electrode sheet that includes two, three, or five or more coated lanes and uncoated parts, based on the description herein.

The roll map PLC 141 may be configured to collect coordinate data CD1 of the first electrode sheet ES1, based on the exhaustion amount signal WAS1 and/or the input amount signal UWAS1 of the first electrode sheet ES1. For example, the roll map PLC 141 may determine a moving distance of the first electrode sheet ES1, based on the exhaustion signal WAS1 of the first electrode sheet ES1. Accordingly, the roll map PLC 141 may be configured to determine a position of a part of the first electrode sheet ES1, which is to be wound by the rewinder 113, on the first electrode sheet ES1 at each point in time when an event occurs in the first electrode sheet ES1.

As another example, the roll map PLC 141 may determine the moving distance of the first electrode sheet ES1 based on the input amount signal UWAS1 of the first electrode sheet ES1 or determine the moving distance of the first electrode sheet ES1 based on each of the exhaust amount signal WAS1 and the input amount signal UWAS1. Hereinafter, as a non-limiting example, the technical idea of the present invention will be described with reference to an embodiment in which the roll map PLC 141 collects the coordinate data CD1 based on the exhaustion amount signal WAS1 of the first electrode sheet ES1.

The coordinate data CD1 may include coordinates matching each portion of the first electrode sheet ES1. That is, each of arbitrary points on the first electrode sheet ES1 may match coordinates corresponding thereto. The coordinates may be one-dimensional (1D) quantity of the first electrode sheet ES1 in the machine direction MD (or a longitudinal direction) but are not limited thereto. The coordinates may be two-dimensional (2D) quantity in the machine direction MD of the first electrode sheet ES1 and the transverse direction TD of the first electrode sheet ES1.

According to example embodiments, the controller 119 may be configured to control the markers 117a and 117b based on the coordinate data CD1. According to example embodiments, the controller 119 may be configured to calibrate coordinates of the coordinate data CD1 based on an offset length of each of the markers 117a and 117b, generate a command MCD to control the markers 117a and 117b based on the calibrated coordinates, and transmit the command MCD to the markers 117a and 117b.

Here, the offset length of each of the markers 117a and 117b may be a length of the first electrode sheet ES1 between a portion of the first electrode sheet ES1 detected by the second rotary encoder 123 and a portion of the first electrode sheet ES1 processed by the markers 117a and 117b. The controller 119 may be configured to transmit data of the operations of the markers 117a and 117b (i.e., data of the formation of the first to fourth datum points DP1, DP2, DP3, and DP4 (hereinafter, referred to as DP1 to DP4)) to the process PLC 143.

The markers 117a and 117b may be, for example, printing devices. The markers 117a and 117b may be configured to form first to fourth datum points DP1 to DP4 on the first electrode sheet ES1, based on a body that is transmitted from an MES and that includes a product ID and specification of a manufacturing recipe transmitted from the MES. The markers 117a and 117b may be configured to form the first to fourth datum points DP1 to DP4 on the first to fourth uncoated parts U1 to U4.

The first datum points DP1 may be formed on the first uncoated part U1, the second datum points DP2 may be formed on the second uncoated part U2, the third datum points DP3 may be formed on the third uncoated part U3, and the fourth datum points DP4 may be formed on the fourth uncoated part U4. The first to fourth datum points DP1 to DP4 may be formed on the first electrode sheet ES1 at predetermined intervals.

Based on the first to fourth datum points DP1 to DP4, other elements on the first electrode sheet ES1 may be located. The first to fourth datum points DP1 to DP4 may be used to calibrate coordinate data of elements on a roll map. For example, the first to fourth datum points DP1 to DP4 may be used to calibrate coordinates of a scrapped portion of the second electrode sheet ES2 (i.e., a start coordinate and end coordinate of the scrapped portion of the second electrode sheet ES2) by the roll press device 200 of FIG. 4 and to calibrate coordinates of a seam of the second electrode sheet ES2. As another example, the first to fourth datum points DP1 to DP4 may be used to calibrate coordinates formed by coupling two or more second electrode rolls ER2.

The marker 117a may be of a fixed type, and the marker 117b may be of a movable type. The marker 117a may be configured to form the first datum points DP1 on the first uncoated part U1 of the first electrode sheet ES1 moved in the machine direction MD from a fixed position. The marker 117b may be configured to move in the transverse direction TD. The marker 117b may be configured to form the second to fourth datum points DP2, DP3, and DP4 on the second to fourth uncoated parts U2, U3, and U4.

The first to fourth datum points DP1 to DP4 may be formed repeatedly. As a non-limiting example, each of the same first to fourth datum points DP1 to DP4 may be repeated, for example, three times. The first datum points DP1 including symbols of 'A101' may be repeated on the first uncoated part U1 three times, the second datum points DP2 including symbols of'A201' may be repeated on the second uncoated part U2 three times, the three datum points DP3 including symbols of 'A301' may be repeated on the third uncoated part U3 three times, and the fourth datum points DP4 including symbols of 'A401' may be repeated on the fourth uncoated part U4 three times. According to example embodiments, an electrode sheet may be prevented from being partially scrapped or all datum points may be prevented from being removed in a notching process by repeatedly forming the first to fourth datum points DP1 to DP4. The number of repetitions of the first to fourth datum points DP1 to DP4 may be one, two, four, or five or more times.

The first datum points DP1 and the second datum points DP2 are formed substantially simultaneously but there may be an offset OF1 between the first datum points DP1 and the second datum points DP2 due to tolerances in the marking process. Because the third datum points DP3 are formed after the formation of the second datum points DP2, there may be an offset OF2 between the first datum points DP1 and the third datum points DP3. The offset OF2 may be greater than the offset OF1. Since the fourth datum points DP4 are formed after the formation of the third datum points DP3, there may be an offset OF3 between the first datum points DP1 and the fourth datum points DP4. The offset OF3 may be greater than the offset OF2.

Accordingly, collecting data about the formation of the first to fourth datum points DP1 to DP4 by the markers 117a and117b may include collecting offset data OFD including the offsets OF1, OF2, and OF3. The offset data OFD may be collected by the controller 119. The controller 119 may be configured to transmit the offset data OFD to the process PLC 143. The offset data OFD may also be transmitted to the process PLC 143 through the roll map PLC 141.

According to example embodiments, each of the first to fourth datum points DP1 to DP4 may include a plurality of symbols. Here, the term "symbol" may be understood as a general term including signs, characters, marks, etc. that represent a particular idea. For example, each of the first to fourth datum points DP1 to DP4 may include a first symbol S1 indicating an orientation each of the first to fourth datum points DP1 to DP4 and an input direction of an electrode roll (e.g., an input direction of the second electrode roll ER2 of FIG. 2 and an input direction of a third electrode roll ER3), a second symbol S2 indicating coated lanes corresponding to the first to fourth datum points DP1 to DP4 among the first to fourth coated lanes L1 to L4, and third and fourth symbols S3 and S4 indicating a formed sequence number of the first to fourth datum points DP1 to DP4.

As a non-limiting example, the first symbol S1 of each of the first to fourth datum points DP1 may be 'A'. The first symbol is not limited to the alphabet, and the first symbol of each of the first to fourth datum points DP1 may include arbitrary signs, characters and marks identifying the orientation of the first symbol. The first symbol S1 may be included in a different set from a set including the second to fourth symbols S2, S3, and S4. For example, when the second to fourth symbols S2, S3, and S4 include Arabic numerals, the first symbol S1 may include arbitrary characters providing orientation information, e.g., alphabet including Greek, Latin, Mongolian, Armenian, N'Ko alphabet, Georgian alphabet, Braille, Cyrillic alphabet, Tifinagh alphabet, and Thaana alphabet, featural alphabet such as Hangul, Abjad such as Syriac, Arabic, and Hebrew, Abugida such as Gujarati, Nevanagari, Lao, Malayalam, Burmese, Sinhalese, Geez, Oriya, Canadian Aboriginal scripts, Kannada, Khmer, Tamil, Thai, Telugu, and Tibetan, and syllabary such as Cherokee syllabary and Ghana. The first symbol S1 may be included in the same set as the second to fourth symbols S2, S3, and S4. For example, the first symbol may include two or more consecutive Arabic numerals, such as 00, 11, 22, or 33.

An outer part of the first electrode roll ER1 put into the coating device 100 may be wound into an inner part of the second electrode roll ER2. Similarly, an inner part of the first electrode roll ER1 put into the coating device 100 may be wound an outer part of in the second electrode roll ER2. The outer part of the second electrode roll ER2 put into the roll pressing device 200 of FIG. 4 may be wound into an inner part of the third electrode roll ER3 (see FIG. 4). Similarly, the inner part of the second electrode roll ER2 put into the roll pressing device 200 of FIG. 4 may be wound into an outer part of the third electrode roll ER3 (see FIG. 4). In addition, the left and right sides of the second electrode sheet ES2 (see FIG. 4) and the third electrode sheet ES3 (see FIG. 7) may be inverted according to a method of loading and unwinding the second electrode roll ER2 and the third electrode roll ER3. Here, the machine direction MD may be parallel to an axis in which the left and right sides are inverted.

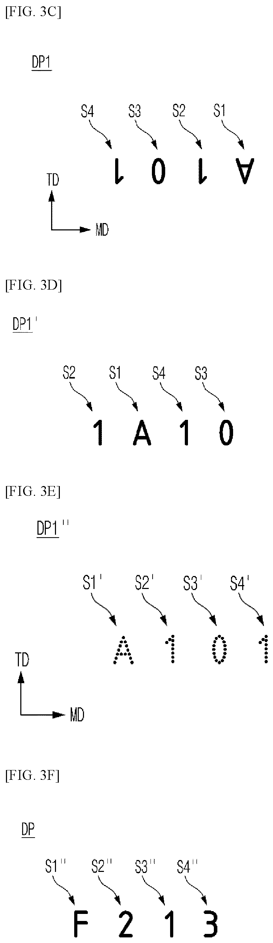

FIG. 3C illustrates a result of inverting the first datum point DP1.

Referring to FIG. 3C, in the second electrode sheet ES2 of FIG. 6, the first to fourth datum points DP1 to DP4 may include a result of inverting a first symbol S1. That is, the first symbol S1 'A' is inverted. It may be determined based on an orientation of the inverted first symbol S1 that the subsequent second to fourth symbols S2, S3, and S4 are inverted and thus the first to fourth symbols S1, S2, S3, and S4 of each of the first to fourth datum points DP1 to DP4 may be accurately read out.

Referring back to FIGS. 2 to 3B, as another example, in the second electrode sheet ES2 of FIG. 5, the first to fourth datum points DP1 to DP4 may include a non-inverted (i.e., upright) first symbol S1 'A'. It may be determined based on an orientation of the non-inverted first symbol S1 that the subsequent second to fourth symbols S2, S3, and S4 are not inverted and thus the first to fourth symbols S1, S2, S3, and S4 of each of the first to fourth datum points DP1 to DP4 may be accurately read out.

When the first symbol S1 is identified, it may be determined that a symbol following the first symbol S1 is the second symbol S2 (i.e., a symbol designating a corresponding one of the first to fourth coated lanes L1 to L4)), a symbol following the second symbol S2 is the third symbol S3 (i.e., a symbol indicating the tens digit of the formed sequence number), and a symbol following the third symbol S3 is the fourth symbol S4 (i.e., a symbol indicating the units digit of the formed sequence number). Accordingly, the second to fourth symbols S2, S3, and S4 of the first to fourth datum points DP1 to DP4 may be determined through identification of the first symbol S1 by a datum point sensor 231 (see FIG. 4) or a datum point sensor 331 (see FIG. 7).

Here, preceding and following symbols are based on horizontal writing from left to right and may be opposite to preceding and following symbols based on the machine direction MD. That is, in the case of the first datum points DP1, 'A' that is the first symbol S1 precedes '101' that is the second to fourth symbols S2, S3, and S4 but portions of the first uncoated part U1 on which '101' that is the second to fourth symbols S2, S3, and S4 is marked may be wound into the rewinder 113 earlier than a portion of the first uncoated part U1 on which 'A' that is the first symbol S1 is marked.

As a non-limiting example, the second symbol S2 of each of the first to fourth datum points DP1 to DP4 may represent a corresponding one of the first to fourth coated lanes L1 to L4. For example, the second symbol S2 of the first datum points DP1 may be '1' indicating the first coated lane L1, the second symbol S2 of the second datum points DP2 may be '2' indicating the second coated lane L2, the second symbol S2 of the third datum points DP3 may be '3' indicating the third coated lane L3, and the second symbol S2 of the fourth datum points DP4 may be '4' indicating the fourth coated lane L4.

The third symbol S3 of each of the first to fourth datum points DP1 to DP4 may the tens digit of the formed sequence number, and the fourth symbol S4 of each of the first to fourth datum points DP1 to DP4 may represent the units digit of the formed sequence number. In FIG. 3A, the third and fourth symbols S3 and S4 of each of the first to fourth datum points DP1 to DP4 may be '01' indicating that the first datum points DP1 are datum points formed first on the first uncoated part U1, the second datum points DP2 are datum points formed first on the second uncoated part U2, the third datum points DP3 are datum points formed first on the third uncoated part U3, and the fourth datum points DP4 are datum points formed first on the fourth uncoated part U4.

However, embodiments are not limited thereto, and the second symbol S2 may include an arbitrary symbol indicating a corresponding one of the first to fourth coated lanes L1 to L4, and the third and fourth symbols S3 and S4 may include an arbitrary symbol indicating the formed sequence number of the first to fourth datum points DP1 to DP4.

For example, alphabets A to I may correspond to Arabic numerals 0 to 9 as shown in Table 1 below.

### (Second Embodiment)

**[Table 1]**

| Alphabet | Number |
|---|---|
| A | 0 |
| B | 1 |
| C | 2 |
| D | 3 |
| E | 4 |
| F | 5 |
| G | 6 |
| H | 7 |
| I | 8 |
| J | 9 |

For example, 'A101' that is the first to fourth symbols S1, S2, S3, and S4 of the first datum point DP1 may be converted into ABAB based on Table 1. As another example, A201 that is the second to fourth symbols S1, S2, S3, and S4 of the second datum point DP2 may be converted into 'ACAB' based on Table 1. An embodiment in which the first to fourth symbols S1, S2, S3, and S4 are arranged in order has been described above. However, the embodiment is only a non-limiting example, and those of ordinary skill in the art will be able to easily derive at an embodiment in which the first to fourth symbols S1 to S4 of the first to fourth datum points DP1 to DP4 are arranged in an arbitrary permutation.

### (Third Embodiment)

FIG. 3D illustrates a first datum point DP1' with a different permuation from a permutation of that of FIG. 3B.

Referring to FIG. 3D, a second symbol S2 indicating a corresponding one of the first to fourth coated lanes L1 to L4 may be a preceding symbol, a first symbol S1 indicating an orientation of the first datum point DP1' may follow the second symbol S2, a fourth symbol S4 indicating the units digit of the formed sequence number may follow the first symbol S1, and a third symbol S3 indicating the tens digit of the formed sequence number may follow the fourth symbol S4. An arbitrary permutation of first to fourth symbols includes a total of twenty-four arrangements, and those of ordinary skill in the art will be able to easily derive remaining twenty-two arrangements, excluding those illustrated in FIGS. 3B and 3D, based on the above description.

Furthermore, those of ordinary skill in the art will be able to easily derive an embodiment in which each of the first to fourth datum points includes an additional symbol for designating a lane, an embodiment in which each of the first to fourth datum points includes three or more symbols for designating a formed sequence number, and an embodiment in which a single symbol is configured to not only designate a lane but also represent an orientation of each of the first to fourth datum points. Although FIG. 3A illustrates only one side of the first electrode sheet ES1, the coating process may be performed on each of both sides of the first electrode sheet ES1, and the first to fourth datum points DP1 to DP4 may be formed on each of the both sides of the first electrode sheet ES1.

### (Fourth Embodiment)

FIG. 3E illustrates a first datum point DP" according to other example embodiments.

Referring to FIG. 3E, the first datum point DP1" is similar to the first datum point DP1 of FIG. 3b but may be formed by a dot printing method. The first datum point DP" may include first to fourth symbols S1', S2', S3', and S4'. The first to fourth symbols S1', S2', S3', and S4' are substantially the same as the first to fourth symbols S1, S2, S3, and S4 of FIG. 3B, except for the printing method.

Each of the first to fourth symbols S1', S2', S3', and S4' may include a plurality of dots. The first to fourth symbols S1', S2', S3', and S4' may include a plurality of dots arranged in the shape of a certain symbol. For example, the first symbol S1' may include a plurality of dots arranged in an 'A' shape, the second symbol S2' may include a plurality of dots arranged in a '1' shape, the third symbol S3 may include a plurality of dots arranged in a '0' shape, and the fourth symbol S4' may include a plurality of dots arranged in the '1' shape.

For example, the first to fourth symbols S1', S2', S3', and S4' may be formed by inkjet printing. As another example, the first to fourth symbols S1', S2', S3', and S4' may be formed by laser printing.

### (Fifth Embodiment)

FIG. 3F illustrates a first datum point DP according to other example embodiments.

Referring to FIG. 3F, the datum point DP may be formed on an uncoated part of an electrode sheet, as in FIG. 2. The datum point DP may include first to fourth symbols S1", S2", S3", and S4".

The first symbol S1" may represent the orientation of the datum point DP and may also represent a coated lane corresponding to the datum point DP. The second symbol S2" may represent the coated lane corresponding to the datum point DP together with the first symbol S1". More specifically, the first symbol S1" may represent a tens digit of formed sequence number of the corresponding coated lane, and the second symbol S2" may represent a units digit of formed sequence number of the corresponding coated lane. The third symbol S3" may represent a tens digit of a formed sequence number of the datum point DP. The fourth symbol S4" may represent a units digit of the formed sequence number of the datum point DP.

Table 2 below shows a relationship between the first and second symbols S1" and S2" and a coated lane.

**[Table 2]**

| First symbol | Second symbol | Corresponding coated lane |
|---|---|---|
| A | 1 | 1 |
| A | 2 | 2 |
| A | 3 | 3 |
| A | 4 | 4 |
| A | 5 | 5 |
| A | 6 | 6 |
| A | 7 | 7 |
| A | 8 | 8 |
| A | 9 | 9 |
| F | 0 | 10 |
| F | 1 | 11 |
| F | 2 | 12 |
| F | 3 | 13 |
| F | 4 | 14 |
| F | 5 | 15 |
| F | 6 | 16 |
| F | 7 | 17 |
| F | 8 | 18 |
| F | 9 | 19 |
| R | 0 | 20 |
| R | 1 | 21 |
| R | 2 | 22 |
| R | 3 | 23 |
| R | 4 | 24 |
| R | 5 | 25 |
| R | 6 | 26 |
| R | 7 | 27 |
| R | 8 | 28 |
| R | 9 | 29 |
| Y | 0 | 30 |
| Y | 1 | 31 |
| Y | 2 | 32 |

Because the first to fourth symbols S1" to S4" of the datum point DP are "F213", the datum point DP may be formed as a thirteenth datum point on an uncoated part corresponding to a twelfth coated lane. In Table 2, alphabets A, F, R, and Y are presented to represent tens digits of the sequence number of the coated lanes but are only examples, and thus, the technical idea of the present invention is not limited thereby in any sense. The first symbol S1" may include various types of symbols, such as different English alphabets, e.g., G, J, L, P, Q, and T, Greek alphabets, e.g., Γ (gamma), Δ (delta), A (lambda), II (pi), Ψ (psi), and Ω (omega), and the like to facilitate identification of an orientation.

Referring back to FIGS. 1 to 3A, the process PLC 143 may be configured to transmit data of operations of the markers 117a and 117b, including offset data OD, to the server 1020 (see FIG. 1) via the EIF 1010 (see FIG. 1). The server 1020 (see FIG. 1) may be configured to generate a first roll map of the second electrode roll ER2 processed by the coating device 100 based on the data of the operations of the markers 117a and 117b and data of additional process events.

Here, the data of the additional process events may include inspection data and measurement data of the first electrode sheet ES1. The measurement data may include a plurality of measured values expressed numerically. For example, the measurement data may include dimensional data of the first electrode sheet ES1 such as thickness and width, loading data of the coating material on the first electrode sheet ES1, dimensional data such as a width of an insulating material provided on the coating material and the overlapping width between the coating material and the insulating material, mismatch data between the coated lanes on an upper surface of the first electrode sheet ES1 and coated lanes on a lower surface of the first electrode sheet ES1, and the like Here, the loading is the amount of the coating material loaded per unit area of the first electrode sheet ES1 and may be an area density of the coating material.

Whether a measured portion of the first electrode sheet ES1 is defective or not may be determined by processing the measurement data by a set method. When the measured amount of the coating material on the first electrode sheet ES1 (e.g., the loading of the coating material on the first electrode sheet ES1 or a thickness of the first electrode sheet ES1) is in a set range including upper and lower limits, a corresponding portion of the first electrode sheet ES1 may be determined as a non-defective. The corresponding portion of the first electrode sheet ES1 may be determined as defective, when the measured amount of the coating material on the first electrode sheet ES1 (e.g., the loading of the coating material on the first electrode sheet ES1 or the thickness of the first electrode sheet ES1) is less than the lower limit or greater than the upper limit.

The measurement data may be collected by a measuring device. The measuring device may include, for example, a time delay and integration (TDI) camera, a complementary metal oxide semiconductor (CMOS) image sensor, and a time-of-flight (TOF) sensor. The measuring device may include an emitter and a receiver that are configured to perform measurement using non-destructive signals such as ultrasound waves, microwaves, terahertz waves, or infrared rays. The measuring device may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may include a processor configured to generate evaluation data based on the measurement data. The evaluation data may be collected based on a comparison between measured values of multiple sections in the first electrode sheet ES1 and the set range.

For example, a measured value (or an average of measured values) that is in a first range may be determined as normal, a measured value (or an average of measured values) that is in a second range greater than the first range may be determined as excessive, a measured value (or an average of measured values) that is in a third range greater than the second range may be determined as very excessive, a measured value (or an average of measured values) that is in a fourth range less than the first range may be determined as insufficient, and a measured value (or an average of measured values) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

Evaluation values of the evaluation data may be related to coordinates. For example, each of the evaluation values may match one of a start coordinate and an end coordinate of a portion of the first electrode sheet ES1 for which the evaluation value is calculated.

The inspection data may be collected by an inspector. The inspector may be configured to inspect the first electrode sheet ES1 to collect inspection data of the first electrode sheet ES1. The inspector may be configured to detect defects such as a surface defect of the first electrode sheet ES1, based on a change in a color and reflectivity or etc., of a surface of the first electrode sheet ES1. The inspector may be configured to collect inspection data of a portion of the first electrode sheet ES1 corresponding to (e.g., overlapping) a sensing part.

The inspection data collected by the inspector may include a result of judging the quality of the portion of the first electrode sheet ES1 and data about a process event. For example, the inspection data may include data about the appearance of the first electrode sheet ES1 collected by an image-based inspection device such as a vision machine, data about disconnections and seams of the first electrode sheet ES1, data about a portion of the first electrode sheet ES1 on which a sampling inspection is performed, data about a portion of the first electrode sheet ES1 to be scrapped, data about a scrapped portion of the first electrode sheet ES1, data about whether the coating material and the insulating material on the first electrode sheet ES1 are defective or not, data about datum points for marking a position of the first electrode sheet ES1, and data about defects such as a pinhole defect, a crater defect, a line defect, a crack defect, a side ring defect, an island defect, a fold defect, a wrinkle defect, a pit defect, and a scratch defect. The inspector may be a color sensor, a seam sensor, a datum point sensor, or a vision machine.

The measurement data and the inspection data described above may be time series data. The measurement data and the inspection data may be temporally ordered. Temporary ordering is a main feature of time series data and should be understand as organizing events in an order in which they occur and arrive to be processed. That is, the measurement data and the inspection data may be stored based on a point in time when measurement and inspection are performed, and may be related to time. Accordingly, each of measured values of the measurement data may be matched to time, and each of inspection values of the inspection data may be matched to time.

For example, data of the measured amount (e.g., the loading on the first electrode sheet ES1 or a thickness of the first electrode sheet ES1) may include a series of measured amounts (e.g., the amounts of loading on the first electrode sheet ES1 or thicknesses of the first electrode sheet ES1) and time values related to the series of measured amounts. The measured amounts and the time values may be matched in a one-to-one manner but are not limited thereto. As another example, the defect data may include values indicating defects and time values related to the values indicating defects. Here, the values indicating defects should be understood to mean that the values include at least one of information as to whether there are defects or information about the types of defects.

A roll map may include coordinate-related measurement data and coordinate-related inspection data that are generated by connecting measurement data and inspection data, which are time-series data, with coordinate data. Accordingly, the roll map may provide traceability for all processes during performing of a subsequent process or after the shipment of a product.

FIG. 4 illustrates a roll pressing device 200 according to example embodiments.

FIGS. 5 and 6 are plan views of a second electrode sheet ES2.

Referring to FIG. 5, the roll pressing device 200 may include an unwinder 211, a rewinder 213, a splicing table 215, a scrap port 217, press rolls 219, a first rotary encoder 221, a second rotary encoder 223, a datum point sensor 231, a roll map programmable logic controller (PLC) 241, and a process PLC 243.

The second electrode roll ER2 may be loaded on the unwinder 211. After the completion of the second electrode roll ER2 by the coating device 100, the second electrode roll ER2 may be transferred to the roll pressing device 200 by a transfer device. The unwinder 211 may be configured to unwind the second electrode sheet ES2 from the second electrode roll ER2. The rewinder 213 may be configured to wind the second electrode sheet ES2 into the third electrode roll ER3. The second electrode sheet ES2 may be wound into the third electrode roll ER3 and be separated by cutting the second electrode sheet ES2 in the transverse direction TD after a certain winding length is achieved. Accordingly, the second electrode sheet ES2 may be moved between the unwinder 211 and the rewinder 213.

The first rotary encoder 221 may be configured to detect the amount of the second electrode sheet ES2 unwound from the second electrode roll ER2 by the unwinder 211. Accordingly, the first rotary encoder 221 may be configured to generate an input amount signal UWAS2 indicating a length of the second electrode sheet ES2 unwound by the unwinder 211. The first rotary encoder 221 may be configured to transmit the input amount signal UWAS2 to the roll map PLC 241.

The second rotary encoder 223 may be configured to detect an amount of the second electrode sheet ES2 wound into the third electrode roll ER3 by the rewinder 213. Accordingly, the second rotary encoder 223 may be configured to generate an exhaustion amount signal WAS2 indicating a length of the second electrode sheet ES2 wound by the rewinder 213. The second rotary encoder 223 may be configured to transmit the exhaustion amount signal WAS2 to the roll map PLC 241.

The roll map PLC 241 may be configured to collect coordinate data CD2 of the second electrode sheet ES2, based on the exhaustion amount signal WAS2 and/or the input amount signal UWAS2 of the second electrode sheet ES2. For example, the roll map PLC 241 may determine a moving distance of the second electrode sheet ES2, based on the exhaustion signal WAS2 of the second electrode sheet ES2. Accordingly, the roll map PLC 241 may be configured to determine a position of a part of the second electrode sheet ES2, which is to be wound by the rewinder 213, on the second electrode sheet ES2 at each point in time when an event occurs in the second electrode sheet ES2. Here, the event may include detecting first to fourth datum points DP1 to DP4 by the datum point sensor 231 and processing the second electrode sheet ES2 by the pressurized rolls 219.

As another example, the roll map PLC 241 may determine a moving distance of the second electrode sheet ES2 based on the input amount signal UWAS2 of the second electrode sheet ES2 or based on each of the exhaust amount signal WAS2 and the input amount signal UWAS2. As a non-limiting example, the technical idea of the present invention will be described below with reference to an embodiment in which the roll map PLC 241 collects the coordinate data CD2 based on the exhaustion amount signal WAS2 of the second electrode sheet ES2.

The coordinate data CD2 may include coordinates matching each portion of the second electrode sheet ES2. That is, arbitrary points on the second electrode sheet ES2 may match coordinates. The coordinates may be ID quantity of the second electrode sheet ES2 in the machine direction MD but are not limited thereto. The coordinates may represent 2D quantity of the second electrode sheet ES2 in the machine direction MD and the transverse direction TD.

The datum point sensor 231 may be configured to detect the first to fourth datum points DP1 to DP4 on the second electrode sheet ES2. The datum point sensor 231 may include a sensing part 231S and a processor 231P. The sensing part 231S and the processor 231P may be connected by wire or wirelessly.

According to example embodiments, the sensing part 231S may include an optical character reader (OCR). The sensing part 231S may be configured to detect the first to fourth datum points DP1 to DP4 to generate a datum point detection signal DSS1. The sensing part 231S may be configured to transmit the datum point detection signal DSS1 to the processor 231P.

According to example embodiments, the number of sensing parts 231S may be less than the number of first to fourth uncoated parts U1 to U4. For example, one sensing part 231S may cover four uncoated parts U1 to U4. Accordingly, costs for constructing the datum point sensor 231 may be decreased.

The sensing part 231S may be configured to detect one of the first to fourth datum points DP1 to DP4 at a fixed position. According to a loading direction and a unwinding direction of the second electrode roll ER2, the sensing part 231S may be configured to detect the first datum points DP1 on the first uncoated part U1 as shown in FIG. 5 or to detect the fourth datum points DP4 on the fourth uncoated part U4 as shown in FIG. 6.

The sensing part 231S may be disposed at a position for detection of the second datum points DP2 on the second uncoated part U2 of FIG. 5 or detection of the third datum points DP3 on the third uncoated part U3 of FIG. 6. The sensing part 231S may be disposed at a position for detection of the third datum points DP3 on the third uncoated part U3 of FIG. 5 or detection of the second datum points DP2 on the second uncoated part U2 of FIG. 6. The sensing part 231S may be disposed at a position for detection of the fourth datum points DP4 on the fourth uncoated part U4 of FIG. 5 or detection of the first datum points DP1 on the first uncoated part U1 of FIG. 6.

The first to fourth datum points DP1 to DP4 may be formed at the same positions on an upper surface and lower surface of the second electrode sheet ES2 in the machine direction MD. Accordingly, the positions of the first to fourth datum points DP1 to DP4 on each of the upper and lower surfaces of the second electrode sheet ES2 may be determined by detecting the first to fourth datum points DP1 to DP4 on the upper or lower surface of the second electrode sheet ES2.

The processor 231P may be configured to collect datum point data DSD1 based on the datum point detection signal DSS1 and the coordinate data CD2. The processor 231P may be configured to collect the datum point data DSD1 by matching coordinates of the coordinate data CD2 with a datum point detection signal DSS1 generated by reading one of the first to fourth datum points DP1 to DP4. Accordingly, the datum point data DSD1 may include a value indicating one of the first to fourth coated lanes L1 to L4 that corresponds to a detected one among the first to fourth datum points DP1 to DP4, a value indicating a formed sequence number of the detected one among the first to fourth datum points DP1 to DP4, and coordinates of the detected one among the first to fourth datum points DP1 to DP4.

The processor 231P may be configured to calibrate the coordinates of the coordinate data CD2 for matching between the datum point detection signal DSS1 of one of the first to fourth datum points DP1 to DP4 and coordinates of the coordinate data CD2. The processor 231P may be configured to calibrate the coordinates of the coordinate data CD2 based on a length of the second electrode sheet ES2 between a portion of the second electrode sheet ES2 wound by the rewinder 213 and a portion of the second electrode sheet ES2 detected by the sensing part 231S, and match the calibrated coordinates to the datum point detection signal DSS1.

The processor 231P may be configured to transmit the datum point data DSD1 to the roll map PLC 241. The roll map PLC 241 may be configured to transmit the datum point data DSD1 to the process PLC 243. The process PLC 243 may be configured to transmit the datum point data DSD1 and additional process event data to the server 1020 (see FIG. 1) via the EIF 1010 (see FIG. 1). The server 1020 (see FIG. 1) may be configured to generate a second roll map of the third electrode roll ER3 processed by the roll pressing device 200, based on the datum point data DSD1 and the additional process event data.

The process PLC 243 may be configured to control operations of the unwinder 211, the rewinder 213, the scrap port 217, and the press rolls 219, based on the datum point data DSD1. The process PLC 243 may be configured to generate signals for operating and stopping the unwinder 211, the rewinder 213, the scrap port 217 and the press rolls 219. The signals for operating and stopping the unwinder 211, the rewinder 213, the scrap port 217, and the press rolls 219 may be generated based on body including a product ID and specification of a manufacturing recipe and the datum point data DSD1.

The roll pressing device 200 may additionally include an inspector and a measuring device, similar to the coating device 100 of FIG. 2. The process PLC 243 may be configured to generate a signal for decreasing a moving speed of the second electrode sheet ES2 or stopping the winding or unwinding of the unwinder 211 and the rewinder 213, when defect data of a roll map of the second electrode roll ER2 or a defect of the second electrode sheet ES2 identified by the inspector and the measuring device of the roll pressing device 200 approaches the splicing table 215.

The scrap port 217 may be configured to wind a defective portion DES of the second electrode sheet ES2 as indicated by a dashed line, after cutting a start point of the defect (or a point adjacent to the start point when a process margin is taken into account) on the splicing table 215. After the defective portion DES of the second electrode sheet ES2 is sufficiently wound by the scrap port 217, a portion of the second electrode sheet ES2 connected to the scrap port 217 and a portion of the second electrode sheet ES2 connected to the unwinder 211 may be separated. Next, a current process may be continued by connecting the portion of the second electrode sheet ES2 connected to the unwinder 211 and the portion of the second electrode sheet ES2 connected to the rewinder 213. The portion of the second electrode sheet ES2 connected to the unwinder 211 and the portion of the second electrode sheet ES2 connected to the rewinder 213 may be connected on the splicing table 215.

The portion of the second electrode sheet ES2 passing the splicing table 215 may be wound into the third electrode roll ER3 by the rewinder 213 after being pressed by the press rolls 219.

FIG. 7 illustrates a coating device 300 according to example embodiments.

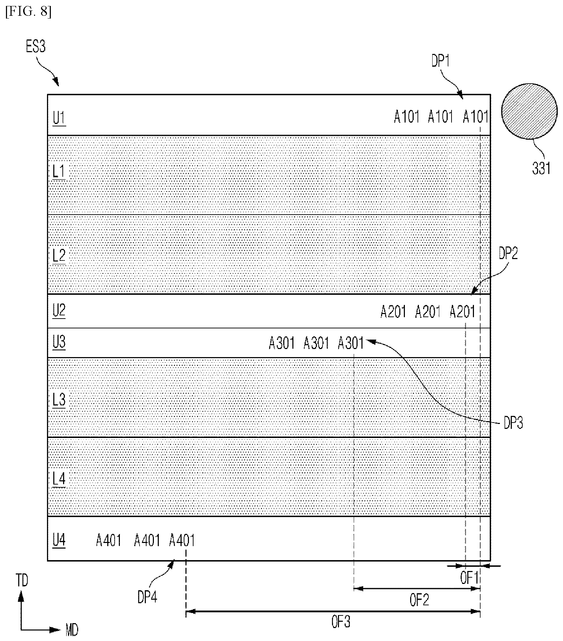

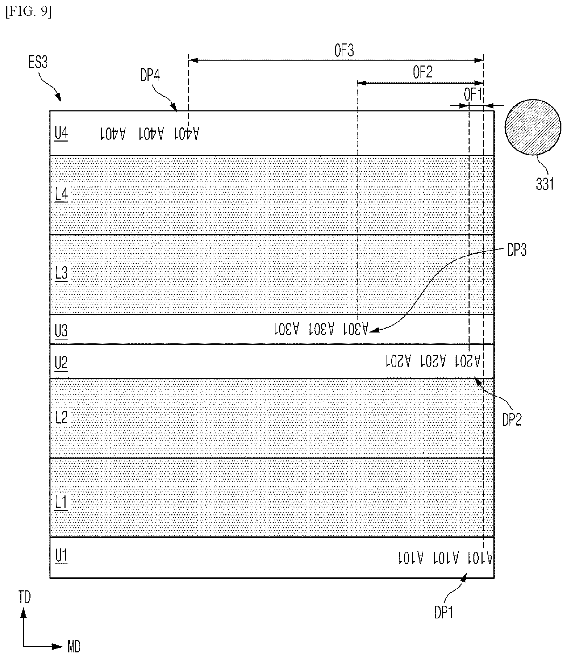

FIGS. 8 and 9 are plan views of a third electrode sheet ES3.

Referring to FIGS. 7 to 9, the slitting device 300 may include an unwinder 311, rewinders 313a and 313b, a slitting knife 315, a guide roll 316, a first rotary encoder 321, second rotary encoders 323a and 323b, a datum point sensor 331, a roll map PLC 341, and a process PLC 343.

The third electrode roll ER3 may be loaded on the unwinder 311. After the completion of the third electrode roll ER3 by the roll pressing device 200, the third electrode roll ER3 may be transferred to the roll pressing device 200 by a transfer device. The unwinder 311 may be configured to unwind a third electrode sheet ES3 from the third electrode roll ER3. The third electrode sheet ES3 may be cut by the slitting knife 315 to form the individualized electrode sheets ES3a and ES3b. The individualized electrode sheet ES3a may be referred to as a first individualized electrode sheet, and the individualized electrode sheet ES3b may be referred to as a second individualized electrode sheet. Each of the individualized electrode sheet ES3a and the individualized electrode sheets ES3b may include a coated lane. For example, the individualized electrode sheet ES3a may include a first coated lane L1, and the individualized electrode sheet ES3b may include a second coated lane L2. The guide roll 316 may be in a moving path of the individualized electrode sheet ES3b to separate a path of individualized electrode sheet ES3a and a path of the individualized electrode sheet ES3b.

For convenience of illustration, FIG. 7 illustrates only the two individualized electrode sheets ES3a and ES3b but the separation of an electrode sheet may be determined based on the number of coated lanes on the electrode sheet. For example, the third electrode sheet ES3 includes the first to fourth coated lanes L1 to L4 and thus may be cut into four individualized electrode sheets.

The rewinders 313a and 313b may be configured to wind the individualized electrode sheets ES3a and ES3b into individualized electrode rolls ER4a and ER4b. The individualized electrode sheets ES3a and ES3b may be wound into the individualized electrode rolls ER4a and ER4b, and the individualized electrode rolls ER4a and ER4b may be separated by being cut in the transverse direction TD after a target winding amount is reached. The individualized electrode roll ER4a may be referred to as a first individualized electrode roll, and the individualized electrode roll ER4b may be referred to as a second individualized electrode roll.

The first rotary encoder 321 may be configured to detect the amount of the third electrode sheet ES3 unwound from the third electrode roll ER3 by the unwinder 311. Accordingly, the first rotary encoder 321 may be configured to generate an input amount signal UWAS3 indicating a length of the third electrode sheet ES3 unwound by the unwinder 311. The first rotary encoder 221 may be configured to transmit the input amount signal UWAS3 to the roll map PLC 341.

The second rotary encoders 323a and 323b may be configured to detect the amount of the third electrode sheet ES3 wound into the individualized electrode rolls ER4a and ER4b by the rewinders 313a and 313b. Accordingly, the second rotary encoders 323a and 323b may be configured to generate exhaustion amount signals WAS3a and WAS3b indicating lengths of the individualized electrode sheets ES3a and ES3b wound by the rewinders 313a and 313b. The second rotary encoders 323a and 323b may be configured to transmit the exhaustion amount signals WAS3a and WAS3b to the roll map PLC 341.

The roll map PLC 341 may be configured to collect coordinate data CD3a of the electrode sheet ES3a and coordinate data CD3b of the electrode sheet ES3b, based on the input amount signal UWAS3 of the third electrode sheet ES3 and/or the exhaustion amount signals WAS3a andWAS3b of the individualized electrode sheets ES3a and ES3b.

For example, the roll map PLC 341 may determine moving distances of the individualized electrode sheet ES3a and ES3b, based on the exhaustion amount signals WAS3a and WAS3b of the third electrode sheet ES3. Accordingly, the roll map PLC 341 may be configured to determine positions of portions of the individualized electrode sheets ES3a and ES3b, which are wound by the rewinders 313a and 313b, on the individualized electrode sheets ES3a and ES3b at each point in time when an event occurs in the individualized electrode sheets ES3a and ES3b. Here, an event in the slitting device 300 may include detection of one of the first to fourth datum points DP1 to DP4.

As another example, the roll map PLC 341 may determine moving distances of the individualized electrode sheet ES3a and ES3b based on the input amount signal UWAS3 of the third electrode sheet ES3 or based on each of the exhaust amount signals WAS3a and WAS3b and the input amount signal UWAS3. As a non-limiting example, the technical idea of the present invention will now be described with reference to an embodiment in which the roll map PLC 341 collects the coordinate data CD3a and CD3b based on the exhaustion amount signals WAS3a and WAS3b.

The coordinate data CD3a and CD3b may include coordinates matching each of portions of the individualized electrode sheets ES3a and ES3b. That is, each arbitrary point on the individualized electrode sheets ES3a and ES3b may match coordinates. The coordinates may represent 1D quantities of the individualized electrode sheets ES3a and ES3b in the machine direction MD but are not limited thereto. The coordinates may be Y-axis direction 2D quantities of the individualized electrode sheets ES3a and ES3b in the machine direction MD and the transverse direction TD.

The datum point sensor 331 may be configured to detect the first to fourth datum points DP1 to DP4 on the third electrode sheet ES3. The datum point sensor 331 may include a sensing part 331S and a processor 331P. The sensing part 331S and the processor 331P may be connected by wire or wirelessly.

According to example embodiments, the sensing part 331S may include an OCR. The sensing part 331S may be configured to detect the first to fourth datum points DP1 to DP4 to generate a datum point detection signal DSS2. The sensing part 331S may be configured to transmit the datum point detection signal DSS3 to the processor 331P.

According to example embodiments, the number of sensing parts 331S may be less than the number of the first to fourth uncoated parts U1 to U4. For example, one sensing part 231S may cover the four uncoated parts U1 to U4. Accordingly, costs for constructing the datum point sensor 331 may be decreased.

The sensing part 331S may be located at a fixed location to detect one of the first to fourth datum points DP1 to DP4. According to a direction in which the third electrode roll ER3 is loaded and a direction in which the third electrode sheet ES3 is unwound, the sensing part 331S may be configured to detect the first datum points DP1 on the first uncoated part U1 as shown in FIG. 8 or to detect the fourth datum points DP4 on the fourth uncoated part U4 as shown in FIG. 9.

The sensing part 331S may be disposed at a position for detection of the second datum points DP2 on the second uncoated part U2 of FIG. 8 or detection of the third datum points DP3 on the third uncoated part U3 of FIG. 9. The sensing part 331S may be disposed at a position for detection of the third datum points DP3 on the third uncoated part U3 of FIG. 8 or detection of the second datum points DP2 on the second uncoated part U2 of FIG. 9. The sensing part 331S may be disposed at a position for detection of the fourth datum points DP4 on the fourth uncoated part U4 of FIG. 8 or detection of the first datum points DP1 on the first uncoated part U1 of FIG. 9.

As described above, the positions of the first to fourth datum points DP1 to DP4 on each of upper and lower surfaces of the third electrode sheet ES3 may be determined by detecting the first to fourth datum points DP1 to DP4 on the upper or lower surface of the third electrode sheet ES3.

The processor 331P may be configured to collect datum point data DSD2 based on the datum point detection signal DSS2 and coordinate data CD3a and CD3b. The processor 331P may be configured to collect the datum point data DSD2 by matching coordinates of the coordinate data CD3a and CD3b with the datum point detection signal DSS2 generated by reading one of the first to fourth datum points DP1 to DP4. Accordingly, the datum point data DSD2 may include a value indicating one of the first to fourth coated lanes L1 to L4 that corresponds to a detected one among the first to fourth datum points DP1 to DP4, a value indicating a formed sequence number of the detected one among the first to fourth datum points DP1 to DP4, and coordinates of the detected one among the first to fourth datum points DP1 to DP4.

The processor 331P may be configured to calibrate the coordinates of the coordinate data CD3a and CD3b for matching between the datum point detection signal DSS2 of one of the first to fourth datum points DP1 to DP4 and coordinates of the coordinate data CD3a and CD3b. The processor 331P may be configured to calibrate the coordinates of the coordinate data CD3a and CD3b based on a length of the third electrode sheet ES3 between a portion of the third electrode sheet ES3 wound by the rewinder 313 and a portion of the third electrode sheet ES3 detected by the sensing part 331S, and match the calibrated coordinates to the datum point detection signal DSS2.

The processor 331P may be configured to transmit the datum point data DSD2 to the roll map PLC 341. The roll map PLC 341 may be configured to transmit the datum point data DSD2 to the process PLC 343. The process PLC 343 may be configured to transmit the datum point data DSD2 and additional process event data to the server 1020 (see FIG. 1) via the EIF 1010 (see FIG. 1). The server 1020 (see FIG. 1) may be configured to generate third roll maps of the individualized electrode rolls ER4a and ER4b processed by the slitting device 300, based on the datum point data DSD2 and the additional process event data.

The process PLC 343 may be configured to transmit the datum point data DSD2 and the additional process event data to the server 1020 (see FIG. 1) via the EIF 1010 (see FIG. 1). The server 1020 (see FIG. 1) may be configured to generate the third roll maps of the individualized electrode rolls ER4a and ER4b processed by the slitting device 300, based on the datum point data DSD2 and the additional process event data.

Referring to FIGS. 1, 2, 4, and 7, the controller 119, the processors 231P and 331P, the roll map PLCs 141, 241, and 341, the process PLCs 143, 243, and 343, the EIF 1010, and the server 1020 may be implemented by hardware, firmware, software, or a combination thereof. For example, the controller 119, the processors 231P and 331P, the roll map PLCs 141, 241, and 341, the process PLCs 143, 243, and 343, the EIF 1010, and the server 1020 may include computing devices such as workstation computers, desktop computers, laptop computers, and tablet computers. The controller 119, the processors 231P and 331P, the roll map PLCs 141, 241, and 341, the process PLCs 143, 243, and 343, the EIF 1010, and the server 1020 may include one of a simple controller, a complex processor such as a microprocessor, a CPU, or a GPU, a processor configured by software, dedicated hardware, and firmware. The controller 119, the processors 231P and 331P, the roll map PLCs 141, 241, and 341, the process PLCs 143, 243, and 343, the EIF 1010, and the server 1020 may be implemented by, for example, a general-purpose computer or application-specific hardware such as a digital signal processor (DSP), a field programmable gate array (FPGA) and an application-specific integrated circuit (ASIC).

The server 1020 may include a physical server or a cloud server. The server 1020 may provide data and an analysis result to an operator through various frameworks.
The framework may include protocols that support data transfer to provide updated visualizations when display device 1030 visualizes data through a user interface and new data is computed by server 1020. The protocol for supporting data transmission may use HTML, JavaScript, and/or JSON.

The server 1020 may include various types of application programming interfaces (APIs) for storing data in a database and other data management tools. The API may also be used to retrieve data from databases of various data management systems. A data management system may provide access to a database, pull or retrieve data from the database, and generate metrics. Here, the metrics are a tool for visualizing data. The metrics include measured values generated in a time-series manner and may be used to monitor applications and generate a status warning.

The server 1020 may be configured to generate a first roll map of the second electrode roll ER2 completed by the coating device 100, a second roll map of the third electrode roll ER3 completed by the roll pressing device 200, and a third roll map of the individualized electrode rolls ER4a and ER4b completed by the slitting device 300. The first roll map may include offset data OFD, and the second and third roll maps may be generated based on the offset data OFD.

The first server 1210 may transmit a visualization command VC to the display device 1300, and the display device 1300 may visualize and display the first to third roll maps. The first to third roll maps described above may be displayed on the display device 1030. The first to third roll maps may be aligned in one direction, thus facilitating tracking of process history.

Referring to FIGS. 1 and 4 to 6, the datum point data DSD1 may be generated by detecting one of the first to fourth datum points DP1 to DP4 (e.g., the first datum points DP1). The server 1020 may be configured to generate datum point data indicating coordinates of the second to fourth datum points DP2, DP3, and DP4, based on the datum point data DSD1 and the offset data OFD (see FIG. 2). The datum point data of the second to fourth datum points DP2, DP3, and DP4 may include a value indicating a formed sequence number of each of the second to fourth datum points DP2, DP3, and DP4 and coordinates matching the value indicating the formed sequence number.

According to example embodiments, coordinates of undetected datum points (e.g., the second to fourth datum points DP2, DP3, and DP4) may be calculated by performing operations on detected datum points (e.g., the first datum points DP1) and the offset data OFD (see FIG. 2). The operations may include subtraction and addition.

As shown in FIG. 5, when the first datum points DP1 are detected, the coordinates of the second datum points DP2 may be calculated by subtracting the offset OF1 from the coordinates of the first datum points DP1, the coordinates of the third datum points DP3 may be calculated by subtracting the offset OF2 from the coordinates of the first datum points DP1, and the coordinates of the fourth datum points DP4 may be calculated by subtracting the offset OF3 from the coordinates of the first datum points DP1.

As shown in FIG. 6, when the fourth datum points DP4 are detected, the coordinates of the first datum points DP1 may be calculated by adding the offset OF3 to the coordinates of the first datum points DP1, the coordinates of the second datum points DP2 may be calculated by subtracting the offset OF1 from the coordinates of the first datum points DP1, and the coordinates of the third datum points DP3 may be calculated by subtracting the offset OF2 from the coordinates of the first datum points DP1.

As described above, the server 1020 may be configured to generate datum point data of undetected datum points among the first to fourth datum points DP1 to DP4, based on the datum point data DSD1 of detected datum points among the first to fourth datum points DP1 to DP4 and the offset data OFD (see FIG. 2). The datum point data DSD1 may be referred to as first datum point data, and the datum point data of the undetected datum points among the first to fourth datum points DP1 to DP4 may be referred to as second datum point data. The server 1020 may be configured to generate the third roll maps of the third electrode roll ER3 completed by the roll pressing process, based on the first datum point data and the second datum point data.

Referring to FIGS. 1 and 7 to 9, the datum point data DSD2 may be generated by detecting one of the first to fourth datum points DP1 to DP4 (e.g., the first datum points DP1). The server 1020 may be configured to generate datum point data indicating coordinates of the second to fourth datum points DP2, DP3, and DP4, based on the datum point data DSD2 and the offset data OFD (see FIG. 2). The datum point data of the second to fourth datum points DP2, DP3, and DP4 may include a value indicating a formed sequence number of each of the second to fourth datum points DP2, DP3, and DP4 and coordinates matching the value indicating the formed sequence number.

As shown in FIG. 8, when the first datum points DP1 are detected, the coordinates of the second datum points DP2 may be calculated by adding the offset OF1 to the coordinates of the first datum points DP1, the coordinates of the third datum points DP3 may be calculated by adding the offset OF2 to the coordinates of the first datum points DP1, and the coordinates of the fourth datum points DP4 may be calculated by adding the offset OF3 to the coordinates of the first datum points DP1.

As shown in FIG. 9, when the fourth datum points DP4 are detected, the coordinates of the first datum points DP1 may be calculated by subtracting the offset OF3 from the coordinates of the first datum points DP1, the coordinates of the second datum points DP2 may be calculated by adding the offset OF1 to the coordinates of the first datum points DP1, and the coordinates of the third datum points DP3 may be calculated by subtracting the offset OF2 from the coordinates of the first datum points DP1.

As described above, the server 1020 may be configured to generate datum point data of undetected datum points among the first to fourth datum points DP1 to DP4, based on the datum point data DSD2 of detected datum points among the first to fourth datum points DP1 to DP4 and the offset data OFD. The datum point data DSD2 may be referred to as third datum point data, and the datum point data of the undetected datum points among the first to fourth datum points DP1 to DP4 may be referred to as fourth datum point data. The server 1020 may be configured to generate the third roll maps of the individualized electrode rolls ER4a and ER4b completed by the slitting device 300, based on the third datum point data and the fourth datum point data.

The third roll maps may include data of a corresponding coated lane among the first to fourth coated lanes L1 to L4. For example, the third roll map of the individualized electrode roll ER4a may include data representing the first coated lane L1, and the third roll map of the individualized electrode roll ER4b may include data representing the second coated lane L2. Each of the individualized electrode rolls ER4a and ER4b includes only a single coated lane after being individualized by the slitting device 300. However, the third roll maps each include data representing the coated lane corresponding thereto and thus the traceability in the secondary battery manufacturing process can be improved.

When the datum point data DSD2 is generated by detecting the first datum points DP1, a third roll map of an individualized electrode roll ER3a including the first uncoated part U1 and the first coated lane L1 may be generated based on the datum point data DSD2 of the first datum points DP1, a third roll map of an individualized electrode roll ER3b including the second uncoated part U2 and the second coated lane L2 may be generated based on datum point data of the second datum points DP2 generated based on the datum point data DSD2 and the offset data OFD, a third roll map of an individualized electrode roll including the third uncoated part U3 and the third coated lane L3 may be generated based on datum point data of the third datum points DP3 generated based on the datum point data DSD2 and the offset data OFD, and a third roll map of an individualized electrode roll including the fourth uncoated part U4 and the fourth coated lane L4 may be generated based on datum point data of the fourth datum points DP4 generated based on the datum point data DSD2 and the offset data OFD.

Referring back to FIGS. 1, 2, 4 and 7, a plug-in architecture may be implemented by the secondary battery manufacturing system 10 together with an API for obtaining data to provide plug-and-play connectivity of a sensor, a measuring device, and an inspector. Accordingly, resources in a certain process step and a specific site can be easily transferred to different processes and different sites or new resources can be easily introduced into each process step and each site.

In some embodiments, the secondary battery manufacturing system 10 may further include a manual input system that allows an operator to input manufacturing data. The secondary battery manufacturing system 10 may allow a computer-based input of manufacturing data such as inputting data by an operator using an input tool and Excel file scraping. The manual input system may be, for example, human-machine interfaces (HMI) of supervisory control and data acquisition (SCADA). Generally, SCADA may include a combination of software and hardware, such as a PLC and remote terminal units (RTU). HMI is a screen that supports communication between an operator and an SCADA system and is a key element of the SCADA system. For example, manual input by HMI may include selecting a defective type and reflecting performance at the time of completion.

According to some embodiments, the operations of the controller 119, the processors 231P and 331P, the roll map PLCs 141, 241, and 341, the process PLCs 143, 243, and 343, the EIF 1010, and the server 1020 may be implemented in the form of instructions stored in a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The controller 119, the processors 231P and 331P, the roll map PLCs 141, 241, and 341, the process PLCs 143, 243, and 343, the EIF 1010, and the server 1020 may include firmware, software, routines, and instructions for performing the above-described operations or processes described below. For example, the controller 119, the processors 231P and 331P, the roll map PLCs 141, 241, and 341, the process PLCs 143, 243, and 343, the EIF 1010, and the server 1020 may be instantiated in a memory.

### (Sixth Embodiment)

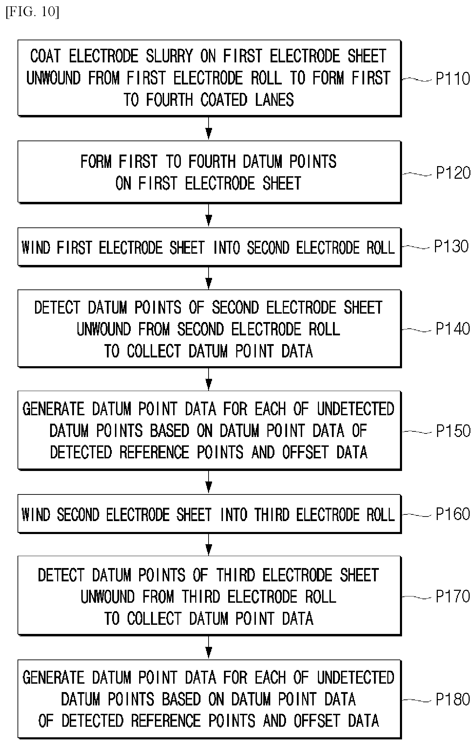

FIG. 10 is a flowchart of a method of manufacturing a secondary battery according to example embodiments.

Referring to FIGS. 2, 3A, and 10, in P110, the first electrode sheet ES1 unwound from the first electrode roll ER1 may be coated with an electrode slurry to form first to fourth coated lanes L1 to L4 on the first electrode sheet ES1. The first electrode sheet ES1 may be coated with the electrode slurry by the die coater 115 of the coating device 100.

Next, in P120, first to fourth datum points DP1 to DP4 may be formed on the first electrode sheet ES1. The first to fourth datum points DP1 to DP4 may be formed by the markers 117a and 117b.

Next, in P130, the first electrode sheet ES1 may be wound into the second electrode roll ER2. The second electrode roll ER2 may be wound by the rewinder 113.

Referring to FIGS. 4 to 6 and 10, in P140, datum points (e.g., the first datum points DP1) on the second electrode sheet ES2 unwound from the second electrode roll ER2 may be detected to collect the datum point data DSD1. In order to unwind the second electrode sheet ES2 from the second electrode roll ER2, the second electrode roll ER2 completed by the coating device 100 (see FIG. 2) may be transferred to the roll pressing device 200 and loaded on the unwinder 211. The second electrode sheet ES2 may be unwound from the second electrode roll ER2 by the unwinder 211.

The collecting of the datum point data DSD1 may include detecting datum points (e.g., the first datum points DP1) on the second electrode sheet ES2 to generate the datum point detection signal DSS1, calibrating coordinates of coordinate data CD2, and matching the calibrated to the datum point detection signal DSS1. The datum point data DSD1 may be collected by the datum point sensor 231. In P140, the second to fourth datum points DP2, DP3, and DP4 may be detected instead of the first datum points DP1 to collect the datum point data DSD1.

Referring to FIGS. 1, 4 to 6, and 10, in P150, datum point data of each of undetected datum points (e.g., the second to fourth datum points DP2, DP3, and DP4) may be generated based on the datum point data DSD1 of the detected datum points (e.g., the first datum points DP1) and the offset data OFD (see FIG. 2). The datum point data of each of the second to fourth datum points DP2, DP3 and DP4 may be generated by the server 1020. Next, a roll map of the third electrode roll ER3 completed by the roll pressing device 200 may be generated based on the datum point data DSD1 of the detected datum points (e.g., the first datum points DP1) and the datum point data of each of the undetected datum points (e.g., the second to fourth datum points DP2, DP3, DP4).

Next, in P160, the second electrode sheet ES2 may be wound into the third electrode roll ER3. The third electrode roll ER3 may be wound by the rewinder 213.

Referring to FIGS. 1 and 7 to 10, in P170, datum points (e.g., first datum points DP1) on the third electrode sheet ES3 unwound from the third electrode roll ER3 may be detected to collect the datum point data DSD2. In order to unwind the third electrode sheet ES3 from the third electrode roll ER3, the third electrode roll ER3 completed by the roll pressing device 200 (see FIG. 4) may be transferred to the slitting device 300 and loaded on the unwinder 311. The third electrode sheet ES3 may be unwound from the third electrode roll ER3 by the unwinder 311.

The collecting of the datum point data DSD2 may include detecting datum points (e.g., the first datum points DP1) on the third electrode sheet ES3 to generate the datum point detection signal DSS2, calibrating coordinates of coordinate data CD2, and matching the calibrated to the datum point detection signal DSS2. The datum point data DSD2 may be collected by the datum point sensor 331. In P170, the second to fourth datum points DP2, DP3, and DP4 may be detected instead of the first datum points DP1 to collect the datum point data DSD2.

Referring to FIGS. 1, 4 to 6, and 10, in P180, datum point data of each of undetected datum points (e.g., the second to fourth datum points DP2, DP3, and DP4) may be generated based on the datum point data DSD2 of the detected datum points (e.g., the first datum points DP1) and the offset data OFD (see FIG. 2). The datum point data of each of the second to fourth datum points DP2, DP3 and DP4 may be generated by the server 1020. Next, , third roll maps of the individualized electrode rolls ER4a and ER4b completed by the roll pressing device 200 may be generated based on the datum point data DSD2 of the detected datum points (e.g., the first datum points DP1) and the datum point data of each of the undetected datum points (e.g., the second to fourth datum points DP2, DP3, DP4). One of the third roll maps may include the datum point data DSD2 of the first datum points DP1, another of the third roll maps may include the datum point data of the second datum points DP2, another of the third roll maps may include the datum point data of the third datum points DP3, and the other of the third roll maps may include the datum point data of the fourth datum points DP4.

### (Seventh Embodiment)

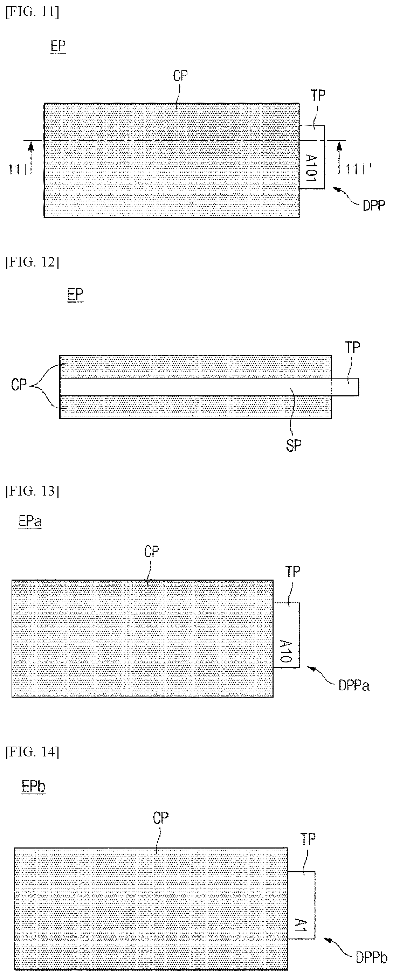

FIG. 11 is a plan view of a positive electrode EP according to example embodiments.

FIG. 12 is a cross-sectional view taken along line 11I-11I' of FIG. 11.

Referring to FIGS. 11 and 12, the positive electrode EP may include a positive electrode current collector SP and positive electrode active material layers CP. The positive electrode EP may be provided by the notching process or by the notching process and the lamination process. The positive electrode EP may be provided by forming a positive electrode tab TP on the individualized electrode rolls ER4a and ER4b of FIG. 7 and cutting an electrode sheet unwound from the individualized electrode rolls ER4a and ER4b to be separated into designed unit lengths in a transverse direction.

A thickness of the positive electrode current collector SP may range from about 3 µm to about 500 µm. The positive electrode current collector SP may not cause a chemical change in a finally manufactured secondary battery and may have high conductivity. The positive electrode current collector SP may include, for example, stainless steel, nickel, titanium, baked carbon, or aluminum. The positive electrode current collector SP may include stainless steel surface-treated with carbon, nickel, titanium, silver, or the like. A surface of the positive electrode current collector SP may include a fine uneven structure to increase the adhesion of an active material. The positive electrode current collector SP may be in the form of a film, sheet, foil or a net, a porous form, or the form of foam or non-woven fabric.

The positive electrode active material layers CP may be formed by the coating device 100 shown in FIG. 2. The positive electrode active material layers CP may be on each of an upper and lower surfaces of the positive electrode current collector SP. Unlike in FIG. 12, the positive electrode active material layers CP may be only on one of the upper and lower surface of the positive electrode current collector SP.

Each of the positive electrode active material layers CP may include a positive electrode active material. The positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}CO_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1y}M'_{y}PO_{4-z}X_{z} (here, M is a transition metal, and more particularly, Fe, Mn, Co or Ni, M' is Al, Mg or Ti, X is F, S or N, - 0.5≤x≤+0.5, 0≤y≤0.5, and 0≤z≤0.1).

The positive electrode current collector SP may include a positive electrode tab TP. The positive electrode tab TP may be an uncoated part remaining after the notching process. A width of the positive electrode tab TP may be different from a width of each of the positive electrode active material layers CP. The width of the positive electrode tab TP may be less than the width of each of the positive electrode active material layers CP. The positive electrode tab TP may protrude from the positive electrode active material layers CP. The positive electrode tab TP may be used for connection of positive electrodes EP and connection to an external connection terminal such as an electrode lead.

Referring to FIGS. 3A, 3B, 11, and 12, there may be a datum point DPP on the positive electrode tab TP. The datum point DPP may be one of the first to fourth datum points DP1 to DP4. Accordingly, the datum point DPP may include a first symbol S1 representing an orientation of one of the first to fourth datum points DP1 to DP4 and an input direction of the electrode roll, a second symbol S2 representing one of the first to fourth coated lanes L1 to L4 that corresponds to one of the first to fourth datum points DP1 to DP4, and third and fourth symbols S3 and S4 representing a formed sequence number of the first to fourth datum points DP1 to DP4.

### (Eighth Embodiment)

FIGS. 13 to 18 are plan views of positive electrodes EPa, EPb, EPc, EPd, EPe, and EPf according to other example embodiments.

Referring to FIG. 13, the positive electrode EPe may be the same as the positive electrode EP of FIG. 12, except for a datum point DPPa.

Referring to FIGS. 3A, 3B, and 13, there may be the datum point DPPa on a positive electrode tab TP. The datum point DPPa may be derived from one of the first to fourth datum points DP1 to DP4. According to example embodiments, the datum point DPPa may include only some of the first to fourth symbols S1, S2, S3, and S4. According to example embodiments, the datum point DPPa may include only the first to third symbols S1, S2, and S3. According to example embodiments, the datum point DPPa may not include the fourth symbol S4. In the present example, the fourth symbol S4 may be removed in a notching process for forming the positive electrode tab TP.

### (Ninth Embodiment)

Referring to FIG. 14, a positive electrode EPb may be the same as the positive electrode EP of FIG. 12, except for a datum point DPPb.

Referring to FIGS. 3A, 3B, and 14, there may be the datum point DPPb on a positive electrode tab TP. The datum point DPPb may be derived from one of the first to fourth datum points DP1 to DP4. According to example embodiments, the datum point DPPb may include only some of the first to fourth symbols S1, S2, S3, and S4. According to example embodiments, the datum point DPPb may include only the first and second symbols S1 and S2. According to example embodiments, the datum point DPPb may not include only the third and fourth symbols S3 and S4. In the present example, the third and fourth symbols S3 and S4 may be removed in a notching process for forming the positive electrode tab TP.

### (Tenth embodiment)

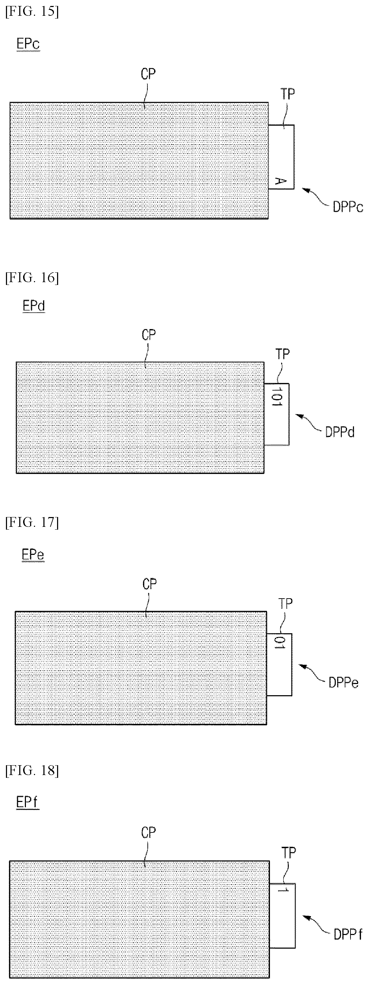

Referring to FIG. 15, a positive electrode EPc may be the same as the positive electrode EP of FIG. 12, except for a datum point DPPc.

Referring to FIGS. 3A, 3B, and 15, there may be the datum point DPPc on a positive electrode tab TP. The datum point DPPc may be derived from one of the first to fourth datum points DP1 to DP4. According to example embodiments, the datum point DPPc may include only some of the first to fourth symbols S1, S2, S3, and S4. According to example embodiments, the datum point DPPc may include only the first symbol S1. According to example embodiments, the datum point DPPc may not include only the second to fourth symbols S2, S3 and S4. In the present example, the second to fourth symbols S2, S3 and S4 may be removed in a notching process for forming the positive electrode tab TP.

### (Eleventh Embodiment)

Referring to FIG. 16, a positive electrode EPd may be the same as the positive electrode EP of FIG. 12, except for a datum point DPPd.

Referring to FIGS. 3A, 3B, and 16, there may be the datum point DPPd on a positive electrode tab TP. The datum point DPPd may be derived from one of the first to fourth datum points DP1 to DP4. According to example embodiments, the datum point DPPd may include only some of the first to fourth symbols S1, S2, S3, and S4. According to example embodiments, the datum point DPPd may include only the second to fourth symbols S2, S3 and S4. According to example embodiments, the datum point DPPd may not include the first symbol S1. In the present example, the first symbol S1 may be removed in a notching process for forming the positive electrode tab TP.

### (Twelfth Embodiment)

Referring to FIG. 17, a positive electrode EPe may be the same as the positive electrode EP of FIG. 12, except for a datum point DPPe.

Referring to FIGS. 3A, 3B, and 17, there may be the datum point DPPe on a positive electrode tab TP. The datum point DPPe may be derived from one of the first to fourth datum points DP1 to DP4. According to example embodiments, the datum point DPPe may include only some of the first to fourth symbols S1, S2, S3, and S4. According to example embodiments, the datum point DPPe may include only the third and fourth symbols S3 and S4. According to example embodiments, the datum point DPPe may not include only the first and second symbols S1 and S2. In the present example, the first and second symbols S1 and S2 may be removed in a notching process for forming the positive electrode tab TP.

### (Thirteenth Embodiment)

Referring to FIG. 18, a positive electrode EPf may be the same as the positive electrode EP of FIG. 12, except for a datum point DPPf.

Referring to FIGS. 3A, 3B, and 18, there may be the datum point DPPf on a positive electrode tab TP. The datum point DPPf may be derived from one of the first to fourth datum points DP1 to DP4. According to example embodiments, the datum point DPPf may include only some of the first to fourth symbols S1, S2, S3, and S4. According to example embodiments, the datum point DPPf may include only the fourth symbol S4. According to example embodiments, the datum point DPPf may not include only the first to third symbols S1, S2, and S3. In the present example, the first to third symbols S1, S2 and S3 may be removed in a notching process for forming the positive electrode tab TP.

Referring to FIGS. 3A, 3B, and FIGS. 14 to 18, examples in which the datum points DPPa, DPPb, DPPc, DPPd, DPPe, and DPPf include only some of the first to fourth symbols S1, S2, S3, and S4 are shown. Those of ordinary skill in the art will be able to easily derive an embodiment in which some of the first to fourth symbols S1, S2, S3 and S4 that are partially cut during the formation of the positive electrode tab TP are provided, based on the above description.

### (Fourteenth Embodiment)

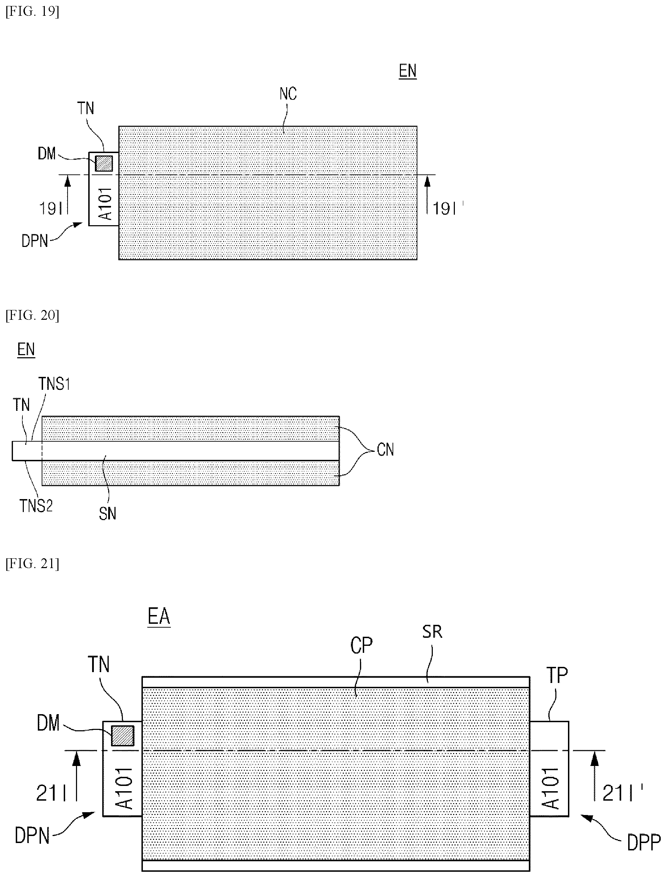

FIG. 19 is a plan view of a negative electrode EN according to example embodiments.

FIG. 20 is a cross-sectional view taken along line 19I-19I' of FIG. 19.

Referring to FIGS. 19 and 20, a negative electrode EN may include a negative electrode current collector SN and negative electrode active material layers CN. The negative electrode EN may be provided by the notching process or by the notching process and the lamination process. The negative electrode EN may be provided by forming a negative electrode tab TN on the individualized electrode rolls ER4a and ER4b of FIG. 7 and cutting an electrode sheet unwound from the individualized electrode rolls ER4a and ER4b to be separated into designed unit lengths in the transverse direction.

A thickness of the positive electrode current collector SN may be in a range of about 3 µm to about 500 µm. The negative electrode current collector SN may not cause a chemical change in a finally manufactured secondary battery and may have high conductivity. The negative electrode current collector SN may include copper, stainless steel, aluminum, nickel, titanium, baked carbon, or an aluminum-cadmium alloy. The negative electrode current collector SN may include stainless steel surface-treated with carbon, nickel, titanium, silver, or the like. A surface of the negative electrode current collector SN may include a fine uneven structure to increase the adhesion of an active material. The negative electrode current collector SN may be in the form of a film, sheet, foil or a net, a porous form, or the form of foam or non-woven fabric.

The negative electrode active material layers CN may be formed by the coating device 100 shown in FIG. 2. The negative electrode active material layers CN may be on each of an upper and lower surfaces of the negative electrode current collector SN. Unlike in FIG. 20, the negative electrode active material layers CN may be only on one of the upper and lower surface of the negative electrode current collector SN.

Each of the negative electrode active material layers CN may include a negative electrode active material. For example, the negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon, silicon-based alloy, or tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The negative electrode current collector SN may include a negative electrode tab TN. The negative electrode tab TN may be an uncoated part remaining after the notching process. A width of the negative electrode tab TN may be different from a width of each of the negative electrode active material layers CN. The width of the negative electrode tab TN may be less than the width of each of the negative electrode active material layers CN. The negative electrode tab TN may protrude from the negative electrode active materials CN. The negative electrode tab TN may be used for connection of negative electrodes EN and connection to an external connection terminal such as an electrode lead.

Referring to FIGS. 3A, 3B, 19 and 12, there may be a datum point DPN on the negative electrode TN. The datum point DPN may be one of the first to fourth datum points DP1 to DP4. Thus, the datum point DPN may include the first to fourth symbols S1, S2, S3 and S4. The datum point DPN may include only some of the first to fourth symbols S1, S2, S3, and S4 as shown in FIGS. 13 to 18.

Those of ordinary skill in the art will be able to easily derive an embodiment in which the datum point DPN includes only some of the first to fourth symbols S1, S2, S3 and S4 similar to FIGS. 13 to 18, based on the above description.

A data matrix DM may be further disposed on the negative electrode tab TN. The data matrix DM may be formed by a method such as laser printing or ink printing. According to example embodiments, the data matrix DM may be 2D barcode. The data matrix DM may include information about an electrode ID identifying the negative electrode tab TN. That is, the data matrix DM may be detected by a sensor such as a bar code reader (BCR) or an OCR to read the electrode ID.

The electrode ID may include a lot ID indicating the individualized electrode roll ER4a or ER4b from which the negative electrode tab TN (or the negative electrode EN including the negative electrode tab TN) is derived, and coordinates indicating a position of the negative electrode tab TN (or the negative electrode EN including the negative electrode tab TN) in the individualized electrode roll ER4a or ER4b. The coordinates may be determined based on a cut count indicating the sequence number of times that cutting is performed to form the negative electrode EN or be determined by an encoder configured to detect the amount of winding the individualized electrode roll ER4a or the individualized electrode roll ER4b. Here, the number of times that cutting is performed may be reset at intervals of a certain time period (e.g., one day).

As described below with reference to FIG. 21, the electrode ID may further include information identifying a positive electrode EP coupled to the negative electrode EN, because the negative electrode EN may be coupled to the positive electrode EP to provide an electrode assembly EA and the data matrix DM cannot be formed on a negative electrode tab TP of the positive electrode EP. More specifically, the electrode ID may include a lot ID of the individualized electrode roll ER4a or ER4b from which the positive electrode EP is derived and coordinates of a position of the positive electrode EP in the individualized electrode roll ER4a or ER4b. That is, the electrode ID may include the lot ID of the positive electrode EP, the coordinates of the positive electrode EP, the lot ID of the negative electrode EN, and the coordinates of the negative electrode EN. The electrode ID may further include additional information specifying a site at which the negative electrode EN and the positive electrode EP were produced and equipment used therefor.

FIGS. 19 and 20 illustrate the data matrix DM and the datum point DPN on the same surface TNS1 of the negative electrode tab TN only for an illustrative purpose and thus the technical idea of the present invention is not limited thereby in any sense. Alternatively, the datum point DPN may be on the surface TNS1, and the data matrix DM may be on a surface TNS2 opposite the surface TNS1.

### (Fifteenth Embodiment)

FIG. 21 is a plan view of an electrode assembly EA according to example embodiments.

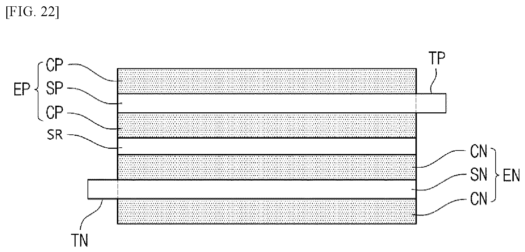

FIG. 22 is a cross-sectional view taken along line 21I-21I' of FIG. 21.

Referring to FIGS. 21 and 22, the electrode assembly EA may include a positive electrode EP, a negative electrode EN, and a separator SR between the positive electrode EP and the negative electrode EN. The positive electrode EP is substantially the same as that described above with reference to FIGS. 11 and 12, and the negative electrode EN is substantially the same as that described above with reference to FIGS. 19 and 20.

The separator SR may physically separate the positive electrode EP and the negative electrode EN to prevent short circuit between the positive electrode EP and the negative electrode EN. The separator SR may be configured to provide a path through which lithium ions may move through an electrolyte. The separator SR may have ion conductivity. The separator SR may include polyethylene, polypropylene, an insulating film coated with ceramic, or a safety reinforced separator (SRS).

Unlike that shown in FIG. 22, the electrode assembly EA may include two or more positive electrodes EP, two mor more separators SR, and two or more negative electrodes EN. In this case, the two or more positive electrodes EP and the two or more negative electrodes EN may be alternately stacked. That is, there may be one of the negative electrodes EN between two adjacent positive electrodes EP among the positive electrodes EP, and there may be one of the positive electrodes EP between two adjacent negative electrodes EN among the negative electrodes EN. The separators SR may be interposed between the positive electrodes EP and the negative electrodes EN.

According to example embodiments of the present invention, a datum point with a symbol representing an orientation thereof is formed on a plurality of uncoated parts of an electrode sheet. Accordingly, the orientation of the datum point can be recognized to increase the accuracy of recognition of the datum point.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A method of manufacturing a secondary battery, comprising:
coating an electrode sheet, which is unwound from an electrode roll, with an electrode slurry to form a plurality of coated lanes, wherein there are a plurality of uncoated parts between the plurality of coated lanes; and
forming a plurality of datum points on the electrode sheet,
wherein each of the plurality of datum points includes a first symbol indicating an orientation of the datum points and a second symbol indicating a corresponding coated lane among the plurality of coated lanes.

2. The method of claim **1,** wherein each of the plurality of datum points includes a third symbol representing a formed sequence number of the plurality of datum points.

3. The method of claim 2, wherein the third symbol represents a tens digit of the formed sequence number.

4. The method of claim 2, wherein each of the plurality of datum points further includes a fourth symbol representing the formed sequence number of the plurality of datum points.

5. The method of claim 4, wherein the fourth symbol represents a units digit of the formed sequence number.

6. The method of claim 4, wherein the first symbol includes an alphabet, and each of the second to fourth symbols includes a number.

7. The method of claim 4, wherein the second symbol follows the first symbol, the third symbol follows the second symbol, and the fourth symbol follows the third symbol.

8. The method of claim 4, wherein the first symbol follows the second symbol, the fourth symbol follows the first symbol, and the third symbol follows the fourth symbol.

9. The method of claim 1, wherein the first symbol further represents the corresponding coated lane among the plurality of coated lanes.

10. The method of claim 1, wherein the first symbol represents a tens digit representing the corresponding coated lane among the plurality of coated lanes.

11. The method of claim 1, wherein the second symbol represents a units digit representing a corresponding coated lane among the plurality of coated lanes.

12. The method of claim 1, wherein the plurality of datum points are formed by dot printing.

13. The method of claim 1, wherein the plurality of datum points are formed by inkjet printing.

14. The method of claim 1, wherein the plurality of datum points are formed by laser printing.

15. The method of claim 1, wherein the plurality of datum points are formed on the plurality of uncoated parts.

16. An electrode comprising:
a current collector including an electrode tab; and
a positive electrode active material on the current collector,
wherein there is a datum point on the electrode tab.

17. The electrode of claim 16, wherein the datum point includes a first symbol, a second symbol, a third symbol, and a fourth symbol.

18. The electrode of claim 17, wherein the first symbol represents an orientation of the datum point.

19. The electrode of claim 17, wherein the second symbol represents a coated lane from which the electrode is derived.

20. The electrode of claim 17, wherein each of the third symbol and the fourth symbol represents a formed sequence number of the datum point.

21. The electrode of claim 20, wherein the third symbol represents a tens digit of the formed sequence number.

22. The electrode of claim 20, wherein the fourth symbol represent a units digit of the formed sequence number.

23. The electrode of claim 17, wherein the first symbol includes an alphabet, and each of the second to fourth symbols includes a number.

24. The electrode of claim 16, wherein the datum point includes first to third symbols.

25. The electrode of claim 16, wherein the datum point includes first and second symbols.

26. The electrode of claim 16, wherein the datum point includes symbols.

27. The electrode of claim 16, further comprising a data matrix on the electrode tab.
